# EUROPEAN PATENT APPLICATION

(11) **EP 4 554 126 A1**
(43) Date of publication of application: **14.05.2025**
(21) Application number: 23851576.1
(22) Date of filing: 21.07.2023
(51) Int. Cl.: H04L 1/1829, H04L 1/20, H04L 65/80, H04W 24/08

(54) **DATA PROCESSING METHOD AND APPARATUS**

(30) Priority: 09.08.2022 CN 202210950596
(71) Applicant: Huawei Technologies Co., Ltd., Shenzhen, Guangdong 518129 (CN)
(72) Inventor: WANG, Jue, Shenzhen, Guangdong 518129 (CN); FAN, Qiang, Shenzhen, Guangdong 518129 (CN); TANG, Xiaowei, Shenzhen, Guangdong 518129 (CN)
(74) Representative: Goddar, Heinz J.
(86) International application number: PCT/CN2023/108700
(87) International publication number: WO 2024/032354

(57) **Abstract**

A data processing method and an apparatus are provided. The method includes: obtaining a first data unit; detecting a packet loss status of a first set to which the first data unit belongs; and discarding the first set when the packet loss status of the first set satisfies a first condition. According to embodiments of this application, a resource waste can be effectively reduced, and resources can be saved.

## Description

This application claims priority to Chinese Patent Application No. 202210950596.6, filed with the China National Intellectual Property Administration on August 9, 2022 and entitled "DATA PROCESSING METHOD AND APPARATUS", which is incorporated herein by reference in its entirety.

### TECHNICAL FIELD

This application relates to the field of communication technologies, and in particular, to a data processing method and an apparatus.

### BACKGROUND

A user plane protocol stack of a 5th generation (5th generation, 5G) mobile communication system may include a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer.

For confidentiality of data transmission, security protection needs to be performed on data transmitted over a radio air interface, including operations such as encryption and integrity protection. In 5G new radio (new radio, NR), a security protection function may be performed at a PDCP layer. An RLC layer is mainly responsible for dividing an RLC service data unit (service data unit, SDU) from the PDCP layer into RLC protocol data units (protocol data unit, PDU) of appropriate sizes.

How to effectively save resources during transmission of a data packet by each protocol stack in the user plane protocol stack needs to be urgently resolved.

### SUMMARY

Embodiments of this application provide a data processing method and an apparatus, to effectively save resources.

According to a first aspect, an embodiment of this application provides a data processing method. The method includes: obtaining a first data unit; detecting a packet loss status of a first set to which the first data unit belongs; and discarding the first set when the packet loss status of the first set satisfies a first condition.

In this embodiment of this application, that the packet loss status of the first set satisfies the first condition indicates that the first set is unavailable, and the first set may be discarded when the packet loss status of the first set detected by a communication apparatus satisfies the first condition. In this way, a resource waste caused by processing or transmission of the first set by the communication apparatus when the first set is unavailable is reduced. Therefore, according to this embodiment of this application, the resource waste is effectively reduced, and resources are saved.

In a possible implementation, before the detecting a packet loss status of a first set to which the first data unit belongs, the method further includes: determining that the first data unit belongs to the first set.

In this embodiment of this application, it is determined that the first data unit belongs to the first set, so that the communication apparatus can determine, based on the packet loss status of the first set, whether to discard the first set. Therefore, the first set is discarded when the packet loss status of the first set satisfies the first condition, saving resources for transmitting the first set or processing the first set.

In a possible implementation, the detecting a packet loss status of a first set to which the first data unit belongs includes: collecting statistics about a quantity of data units in the first set that are discarded, where that the packet loss status of the first set satisfies the first condition includes: The quantity of data units that are discarded is greater than or equal to a first threshold, or a ratio of the quantity of data units that are discarded to a total quantity of data units in the first set is greater than or equal to a second threshold.

In this embodiment of this application, the statistics about the quantity of data units in the first set that are discarded is collected, so that the communication apparatus can accurately detect the packet loss status of the first set, to more accurately determine whether to discard the first set.

In a possible implementation, the collecting statistics about a quantity of data units in the first set that are discarded includes: when a timer corresponding to the first data unit expires and the first data unit is not successfully sent, increasing the quantity of data units in the first set that are discarded by 1.

In a possible implementation, the method further includes: when the first data unit is a 1^{st} data unit in the first set, starting to collect the statistics about the quantity of data units in the first set that are discarded.

In a possible implementation, that the first data unit is not successfully sent includes at least one of the following: The first data unit is not delivered to a lower layer, the first data unit is not sent through an air interface, and the first data unit is not delivered to a media access control (media access control, MAC) layer. Alternatively, that the first data unit is not successfully sent includes at least one of the following: The first data unit is not delivered to an upper layer, and the first data unit fails to be reassembled.

In a possible implementation, the detecting a packet loss status of a first set to which the first data unit belongs includes: when a timer corresponding to the first set expires, collecting statistics about a quantity of data units in the first set that are not successfully sent, where that the packet loss status of the first set satisfies the first condition includes: The quantity of data units that are not successfully sent is greater than or equal to a first threshold, or a ratio of the quantity of data units that are not successfully sent to a total quantity of data units in the first set is greater than or equal to a second threshold.

In a possible implementation, the method further includes: when the first data unit is a 1^{st} data unit in the first set, starting the timer corresponding to the first set.

In a possible implementation, the data unit that is not successfully sent includes at least one of the following: a data unit that is not delivered to a lower layer, a data unit that is not sent through an air interface, and a data unit that is not delivered to a MAC layer. Alternatively, the data unit that is not successfully sent includes at least one of the following: a data unit that is not delivered to an upper layer, and a data unit that fails to be reassembled.

In a possible implementation, the detecting a packet loss status of a first set to which the first data unit belongs includes: collecting statistics about a quantity of data units in the first set that fail to be reassembled, where that the packet loss status of the first set satisfies the first condition includes: The quantity of data units that fail to be reassembled is greater than or equal to a first threshold, or a ratio of the quantity of data units that fail to be reassembled to a total quantity of data units in the first set is greater than or equal to a second threshold.

In a possible implementation, the collecting statistics about a quantity of data units in the first set that fail to be reassembled includes: when the first data unit fails to be reassembled, increasing the quantity of data units in the first set that fail to be reassembled by 1.

In a possible implementation, that the first data unit fails to be reassembled includes: One or more data unit segments included in the first data unit are discarded, or reassembly of one or more data unit segments included in the first data unit is not completed.

In a possible implementation, the method further includes: when the first data unit is a 1^{st} data unit in the first set, starting to collect the statistics about the quantity of data units in the first set that fail to be reassembled.

According to a second aspect, an embodiment of this application provides a communication apparatus, configured to perform the method in any one of the first aspect or the possible implementations of the first aspect. The communication apparatus includes units that perform the method in any one of the first aspect or the possible implementations of the first aspect. For example, the communication apparatus includes a processing unit and a transceiver unit.

According to a third aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal.

According to a fourth aspect, an embodiment of this application provides a chip. The chip includes a logic circuit and an interface. The logic circuit is coupled to the interface. The interface is configured to input and/or output code instructions. The logic circuit is configured to execute the code instructions, so that the method according to any one of the first aspect or the possible implementations of the first aspect is performed.

According to a fifth aspect, an embodiment of this application provides a computer-readable storage medium. The computer-readable storage medium is configured to store a computer program. When the computer program is run on a computer, the method according to any one of the first aspect or the possible implementations of the first aspect is performed.

According to a sixth aspect, an embodiment of this application provides a computer program product. The computer program product includes a computer program or computer code (which may also be referred to as instructions). When the computer program or the computer code is run on a computer, the method according to any one of the first aspect or the possible implementations of the first aspect is performed.

According to a seventh aspect, an embodiment of this application provides a computer program. When the computer program is run on a computer, the method according to any one of the first aspect or the possible implementations of the first aspect is performed.

According to an eighth aspect, an embodiment of this application provides a communication system. The communication system includes a transmit end and a receive end, and at least one of the transmit end or the receive end is configured to perform the method according to any one of the first aspect or the possible implementations of the first aspect.

### BRIEF DESCRIPTION OF DRAWINGS

FIG. 1 is a diagram of an architecture of a communication system according to an embodiment of this application;
FIG. 2 is a schematic flowchart of a data processing method according to an embodiment of this application;
FIG. 3a is a diagram of a structure of a user plane protocol stack according to an embodiment of this application;
FIG. 3b is a diagram of a structure of another user plane protocol stack according to an embodiment of this application;
FIG. 4a is a schematic flowchart of a data processing method according to an embodiment of this application;
FIG. 4b is a diagram in which a transmitting PDCP entity adds a PDU set (PDU set) serial number to a PDCP header according to an embodiment of this application;
FIG. 4c is a diagram in which a transmitting PDCP entity adds a PDU set sequence number to a PDCP header according to an embodiment of this application;
FIG. 4d is a diagram in which a transmitting PDCP entity adds a PDU set sequence number to a PDCP header according to an embodiment of this application;
FIG. 5 is a schematic flowchart of a data processing method according to an embodiment of this application;
FIG. 6 is a schematic flowchart of a data processing method according to an embodiment of this application;
FIG. 7a is a schematic flowchart of a data processing method according to an embodiment of this application;
FIG. 7b is a schematic flowchart of a data processing method according to an embodiment of this application;
FIG. 7c is a schematic flowchart of a data processing method according to an embodiment of this application;
FIG. 8a is a diagram of a process in which a receiving unacknowledged mode (unacknowledged mode, UM) RLC entity maintains variables according to an embodiment of this application;
FIG. 8b is a schematic flowchart of a data processing method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a chip according to an embodiment of this application.

### DESCRIPTION OF EMBODIMENTS

To make the objectives, technical solutions, and advantages of this application clearer, this application is further described below with reference to the accompanying drawings.

Terms "first", "second", and the like in the specification, claims, and accompanying drawings of this application are merely used to distinguish between different objects, and are not used to describe a specific order. In addition, terms such as "include" and "have" and any variants thereof are intended to cover a non-exclusive inclusion. For example, processes, methods, systems, products, devices, or the like that include a series of steps or units are not limited to listed steps or units, but instead, optionally further include steps, units, or the like that are not listed, or optionally further include other steps or units inherent to these processes, methods, products, or devices.

The "embodiment" mentioned in this specification means that specific features, structures, or characteristics described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression means any combination of these items. For example, at least one of a, b, or c may represent: a, b, c, "a and b", "a and c", "b and c", or "a and b and c".

The technical solutions provided in embodiments of this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system emerging in future communication development, such as a 6th generation (6th generation, 6G) communication system.

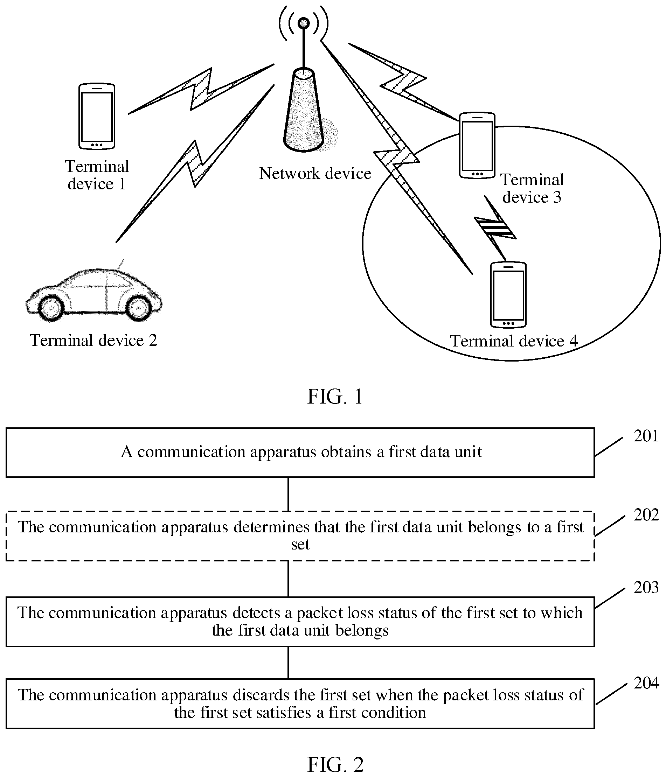

The technical solutions provided in embodiments of this application may also be applied to non-terrestrial network (non-terrestrial network, NTN) communication (which may also be referred to as non-terrestrial network communication), machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, an industrial internet, or another network. The IoT network may include, for example, an internet of vehicles. Communication modes in an internet of vehicles system are collectively referred to as vehicle-to-everything (vehicle-to-everything, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 shown below, terminal devices may communicate with each other by using the D2D technology, the M2M technology, the V2X technology, or the like.

The technical solutions provided in embodiments of this application may be further applied to a wireless local area network (wireless local area network, WLAN) system, for example, Wi-Fi. For example, a method provided in embodiments of this application is applicable to the institute of electrical and electronics engineers (institute of electrical and electronics engineers, IEEE) 802.11 series protocols, such as the 802.11a/b/g protocol, the 802.11n protocol, the 802.11ac protocol, the 802.11ax protocol, the 802.11be protocol, or a next-generation protocol, which are not enumerated one by one herein. For another example, the method is also applicable to a wireless personal area network (wireless personal area network, WPAN) that is based on an ultra wideband (ultra wideband, UWB) technology, such as the 802.15.4a protocol, the 802.15.4z protocol, and the 802.15.4ab protocol in the IEEE 802.15 series protocols, and a future generation of UWB WPAN protocol. Other applicable protocols are not enumerated herein. A person skilled in the art easily understands that various aspects in embodiments of this application may be extended to other networks using various standards or protocols, for example, Bluetooth (Bluetooth), a high performance radio LAN (high performance radio LAN, HIPERLAN) (which is a wireless standard similar to the IEEE 802.11 standard, and is mainly used in Europe), a wide area network (WAN), or other networks known or developed in the future. Therefore, regardless of a coverage area and a wireless access protocol that are used, the technical solutions provided in embodiments of this application are applicable to any suitable wireless network.

FIG. 1 is a diagram of an architecture of a communication system according to an embodiment of this application. As shown in FIG. 1, the communication system may include at least one network device and at least one terminal device, for example, a terminal device 1 to a terminal device 4 in FIG. 1. For example, the terminal device 3 and the terminal device 4 shown in FIG. 1 may directly communicate with each other. For example, terminal devices may directly communicate with each other by using a D2D technology. The terminal device 1 to the terminal device 4 each may communicate with the network device. It may be understood that the terminal device 3 and the terminal device 4 may directly communicate with the network device, or may indirectly communicate with the network device, for example, communicate with the network device via another terminal device (not shown in FIG. 1). It should be understood that FIG. 1 shows an example of one network device, a plurality of terminal devices, and communication links between communication devices. Optionally, the communication system may include a plurality of network devices, and another quantity of terminal devices, for example, more or fewer terminal devices, may be included in a coverage area of each network device. This is not limited in this embodiment of this application. The following details the terminal device and the network device.

The terminal device is an apparatus having wireless sending and receiving functions. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or vehicle-mounted device; or may be deployed on the water (for example, a ship). In a possible implementation, the terminal device may be a handheld device having a wireless communication function, a vehicle-mounted device, a wearable device, a sensor, a terminal in an internet of things, a terminal in an internet of vehicles, an uncrewed aerial vehicle, a terminal device in any form in a 5G network or a future network, or the like. This is not limited in this embodiment of this application. It may be understood that the terminal device described in this embodiment of this application may include a vehicle (for example, a car) in the internet of vehicles, and may also include a vehicle-mounted device, a vehicle-mounted terminal, or the like in the internet of vehicles. A specific form of the terminal device used in the internet of vehicles is not limited in this embodiment of this application. It may be understood that the terminal devices described in this embodiment of this application may communicate with each other by using D2D, V2X, M2M, or the like. A communication method between the terminal devices is not limited in this embodiment of this application.

The network device may be an apparatus that is deployed in the radio access network and that provides a wireless communication service for the terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having wireless sending and receiving functions, and includes but is not limited to the base station shown above (including a base station deployed on a satellite). Alternatively, the network device may be an apparatus that has a base station function in 6G. Optionally, the network device may be an access node, a wireless relay node, a wireless backhaul node, or the like in a wireless local area network (wireless fidelity, Wi-Fi) system. Optionally, the network device may be a radio controller in a cloud radio access network (cloud radio access network, CRAN) scenario. Optionally, the network device may be a wearable device, a vehicle-mounted device, or the like. Optionally, the network device may be a small cell, a transmission reception point (transmission reception point, TRP) (or referred to as a transmission point), or the like. It may be understood that the network device may alternatively be a base station, a satellite, or the like in a future evolved public land mobile network (public land mobile network, PLMN). The network device may alternatively be a communication apparatus or the like functioning as a base station in a non-terrestrial communication system, D2D, V2X, or M2M. A specific type of the network device is not limited in this embodiment of this application. In systems using different radio access technologies, names of communication apparatuses having network device functions may be different, and are not enumerated in this embodiment of this application. Optionally, in some deployments of the network device, the network device may include a central unit (central unit, CU), a distributed unit (distributed unit, DU), and the like. The network device including the CU and the DU may be understood as splitting protocol layers. Functions of some protocol layers are centrally controlled by the CU, functions of some or all remaining protocol layers are distributed in the DU, and the CU centrally controls the DU. In some other deployments of the network device, a CU may be further divided into a CU-control plane (control plane, CP), a CU-user plane (user plane, UP), and the like. In still some deployments of the network device, the network device may alternatively be an open radio access network (open radio access network, ORAN) architecture or the like. A specific deployment manner of the network device is not limited in this embodiment of this application.

Network architectures and service scenarios that are described in embodiments of this application are intended to describe the technical solutions in embodiments of this application more clearly, but do not constitute any limitation on the technical solutions provided in embodiments of this application. A person skilled in the art may know that with the evolution of network architectures and emergence of new service scenarios, the technical solutions provided in embodiments of this application are also applicable to similar technical problems.

During transmission of data packets, at least one of two communication parties may discard a data packet. When one or more data packets are discarded, a set to which the one or more data packets belong may be unavailable. If another data packet in the set continues to be transmitted, air interface resources and transmission energy are wasted. The transmission energy may be understood as transmit power consumed when a communication apparatus sends a data packet.

In view of this, embodiments of this application provide a data processing method and an apparatus, to effectively save resources, such as air interface resources or transmission energy.

FIG. 2 is a schematic flowchart of a data processing method according to an embodiment of this application. The method may be applied to a terminal device, a network device, or the like. For example, the method may be applied to a communication system including UE and a base station, a V2X system, a Wi-Fi system, and the like. For a system to which the method is applied, refer to the foregoing descriptions. Details are not described herein again. For ease of description, the following uses a communication apparatus as an example to describe the method shown in FIG. 2. The communication apparatus may be a terminal device, a network device, or a chip, and the chip may be used in a terminal device or a network device. The communication apparatus may be a transmit end (or an entity at a transmit end) or a receive end (or an entity at a receive end) in two communication parties. For example, the transmit end may be understood as a party, sending a data unit included in a first set, in the two communication parties, or the receive end may be understood as a party, receiving a data unit included in a first set, in the two communication parties. For another example, the transmit end may be understood as a party, sending a first data unit, in the two communication parties, or the receive end may be understood as a party, receiving a first data unit, in the two communication parties. There may be the following cases during data processing of the transmit end and the receive end: For example, the transmit end in the two communication parties may discard the first set (or the first data unit), and consequently, the receive end in the two communication parties cannot receive the first set (or the first data unit). For another example, the transmit end in the two communication parties does not discard the first set (or the first data unit), but the receive end may discard the first set (or the first data unit). For example, the transmit end may be a network device, and the receive end may be a terminal device. Alternatively, the transmit end may be a terminal device, and the receive end may be a network device. Alternatively, both the transmit end and the receive end may be terminal devices. Details are not described herein again. Certainly, there may be one or more forwarding devices during data transmission between the transmit end and the receive end. This is not limited in this embodiment of this application.

As shown in FIG. 2, the data processing method provided in this embodiment of this application includes the following steps.

201: The communication apparatus obtains the first data unit.

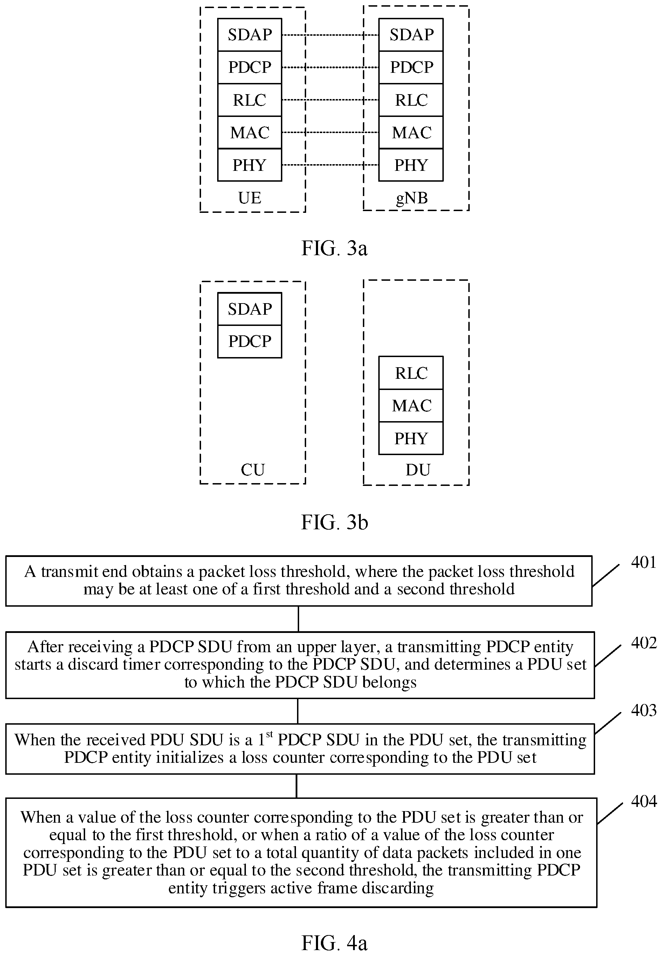

Before the first data unit is described, a user plane protocol stack of the communication apparatus is first described. In an example, FIG. 3a is a diagram of a structure of a user plane protocol stack according to an embodiment of this application. As shown in FIG. 3a, user plane protocol stacks of UE and a gNB may include at least one of the following: a SDAP, a PDCP, RLC, MAC, and PHY. In another example, FIG. 3b is a diagram of a structure of another user plane protocol stack according to an embodiment of this application. As shown in FIG. 3b, a SDAP and a PDCP are deployed on a CU, and RLC, MAC, and PHY are deployed on a DU. The CU and the DU may be connected through an F1 interface. The CU represents a gNB and is connected to a core network through an NG interface. The CU represents the gNB and is connected to another gNB through an Xn interface.

It may be understood that the user plane protocol stacks shown in FIG. 3a and FIG. 3b are merely examples. As a standard progresses, the user plane protocol stack may change, and any user plane protocol stack by which the communication apparatus can perform the method provided in this embodiment of this application falls within the protection scope of embodiments of this application. It may be understood that each protocol layer in the user plane protocol stacks shown in FIG. 3a and FIG. 3b processes an SDU (or a PDU). For a specific processing manner, refer to a related standard or protocol. Details are not described herein again. Functions implemented by each protocol layer shown in FIG. 3a and FIG. 3b may be implemented by an entity at the corresponding protocol layer. A protocol layer and an entity (an entity corresponding to the protocol layer) described below may be understood as being in correspondence or interchangeable. Similarly, the SDU and the PDU described below may be understood as being in correspondence or interchangeable. For a manner of processing between the SDU and the PDU, refer to a related standard or protocol.

For example, FIG. 3a is used as an example. When the UE sends a data unit, each entity (entity) of the UE may process an obtained SDU, and then deliver, to a next layer, a PDU obtained through processing. For example, after receiving a PDCP SDU from an upper layer, a transmitting PDCP entity may perform at least one of the following operations: allocating a PDCP sequence number (sequence number, SN), performing header compression, encryption, and integrity protection, adding a PDCP header to generate a PDCP PDU, and delivering the PDCP PDU to a lower layer for sending over an air interface. When the gNB receives a data unit, each entity of the gNB may process an obtained PDU, and then deliver, to an upper layer, an SDU obtained through processing. For example, after receiving a PDCP PDU from a lower layer, a receiving PDCP entity may perform at least one of the following operations: removing a PDCP header, performing decryption and integrity protection verification, performing duplicate detection, and finally delivering an obtained SDU to an upper layer.

According to the user plane protocol stack described above, for the transmit end, a function implemented by each protocol layer may be understood as processing an obtained SDU and delivering a PDU to a lower layer; and for the receive end, a function implemented by each protocol layer may be understood as processing an obtained PDU and delivering an SDU to an upper layer. Therefore, for brevity, the SDU and the PDU are not distinguished below, and are uniformly represented by using a data unit. For example, the first data unit may include any one of the following: a PDCP SDU, an RLC SDU, a PDCP PDU, and an RLC PDU. Certainly, the PDCP and the RLC described herein are merely examples, and other protocol layers in the user plane protocol stack are not listed one by one. Alternatively, the first data unit may be understood as a first data packet or the like. A specific name of the first data unit is not limited in this embodiment of this application.

A manner in which the communication apparatus obtains the first data unit may include: When the communication apparatus is the transmit end, if the transmit end is a terminal device, the terminal device may generate the first data unit, for example, an application layer generates a data packet and delivers the data packet to a user plane protocol stack; or if the transmit end is a network device, the network device may obtain a data packet from a user plane function (user plane function, UPF), and then generate the first data unit based on a user plane protocol stack. When the communication apparatus is the receive end, if the receive end is a terminal device, the terminal device may receive the first data unit from a network device; or if the receive end is a network device, the network device may receive the first data unit from a terminal device.

In a possible implementation, the method shown in FIG. 2 further includes step 202.

202: The communication apparatus determines that the first data unit belongs to the first set.

The first set may be understood as a data unit set, a service data unit set, a protocol data unit set (protocol data unit set, PDU set), or the like. In an example, the first set may include a plurality of data units, and a quantity of data units included in the first set is not limited in this embodiment of this application. In another example, the first set may be understood as a set of all data units for transmitting one information element, where the information element may be understood as a video frame, a video slice, or the like. For example, extended reality (extended reality, XR) is an environment that integrates a real world and a virtual world and supports human-computer interaction and that is generated by using a computer technology and a wearable device, and is a collective term for a plurality of forms such as augmented reality (augmented reality, AR), virtual reality (virtual reality, VR), and mixed reality (mixed reality, MR). XR implements "immersive" experience of seamless switching between the virtual world and the real world through fusion of three visual interaction technologies. A video in an XR service is formed by continuous playback of continuous images (or pictures, photos, or the like). One video frame may be understood as one image, and the one video frame may be divided into a plurality of data packets for transmission. Therefore, the first set may be understood as one video frame, one frame, or the like, and the one video frame may include a plurality of data units (including the first data unit). Generally, an application server may periodically generate a set (which may also be referred to as a PDU set or the like) based on a specific frame rate. For example, if the frame rate is valued to 60 frames per second (frames per second, fps), it indicates that the application server generates 60 images per second, and generates one set about every 16.66 ms. The application server may include an XR application server and the like. This is not limited in this embodiment of this application.

The communication apparatus may determine, in the following manners, that the first data unit belongs to the first set.

Manner 1: For a downlink service, the user plane function (user plane function, UPF) may add a start flag and/or an end flag of each set to a general packet radio system tunneling protocol for the user plane (general packet radio system tunneling protocol for the user plane, GTP-U) header, and the communication apparatus determines, based on the start flag and/or the end flag, a data unit that belongs to the first set. For example, the UPF may add a start flag or an end flag to the GTP-U header for the first set. In this case, the quantity of data units included in the first set may be fixed. Therefore, the communication apparatus may determine, based on the start flag or the end flag, that the first data unit belongs to the first set. For another example, the UPF may add a start flag and an end flag to the GTP-U header for the first set, so that the communication apparatus can quickly and effectively determine that the first data unit belongs to the first set. In an example, the start flag may be added to a 1^{st} packet in each set. For example, if the communication apparatus receives 10 data packets, and identifies that a 1^{st} packet and a 6^{th} packet each carry a start flag, it is considered that the 1^{st} to the 5^{th} packets belong to one set, and the 6^{th} to the 10^{th} packets belong to another set. In another example, the end flag may be added to a last packet in each set. For example, if the communication apparatus receives 10 data packets, and identifies that a 5^{th} packet and a 10^{th} packet each carry an end flag, it is considered that the 1^{st} to the 5^{th} packets belong to one set, and the 6^{th} to the 10^{th} packets belong to another set. In still another example, the start flag may be added to a 1^{st} packet in each set and the end flag may be added to a last packet. For example, if the communication apparatus receives 10 data packets, and identifies that a 1^{st} packet and a 6^{th} packet each carry a start flag and a 5^{th} packet and a 10^{th} packet each carry an end flag, it is considered that the 1^{st} to the 5^{th} packets belong to one set, and the 6^{th} to the 10^{th} packets belong to another set.

In Manner 1, not only a set to which a data unit belongs can be determined, but also the communication apparatus can determine, based on a start flag, a 1^{st} data unit that belongs to a set, or determine a last data unit in a set (equivalent to determining a 1^{st} data unit in a next set of the set) based on an end flag.

Manner 2: For a downlink service, the UPF may add, to a GTP-U header, a set identifier for a data unit included in each set. For example, the UPF may add, to the GTP-U header, a set identifier for each data unit included in the first set, so that the communication apparatus determines, based on the set identifier included in each data unit, that the first data unit belongs to the first set.

Manner 3: The communication apparatus may maintain a timer, and duration of the timer may be set to maximum duration or average duration in which all data units in a set arrive at the network device or the terminal device. The maximum duration (or the average duration) described herein is duration from time when a 1^{st} data unit in the set arrives at the network device to time when a last data unit in the set arrives at the network device. If the communication apparatus receives the first data unit in a non-running period of the timer, the timer is started, and it is considered that the first data unit is a 1^{st} data unit in the first set. All data units received in a running period of the timer may be considered as belonging to the first set. Generally, data units in a set arrive at the communication apparatus in a form of a burst. In other words, the data units in the set arrive at the communication apparatus in a concentrated manner. Therefore, the communication apparatus may determine, based on a degree of concentration of arrival of data units, whether a data unit is a 1^{st} data unit in a set.

Manner 1 to Manner 3 described above may be applicable to the network device, and Manner 3 may be applicable to the terminal device. It may be understood that in specific implementation, Manner 1 to Manner 3 may be separately implemented, or may be implemented in combination with each other. This is not limited in this embodiment of this application.

Optionally, for the transmit end, the transmit end may associate a set identifier with the first data unit after determining that the first data unit belongs to the first set (for example, in at least one of Manner 1 to Manner 3), that is, set identifiers of different data units in the first set may be a set identifier of the first set. Optionally, the transmit end may maintain a counter, where an initial value of the counter is 0, and a value of the counter is increased by 1 each time the entity at the transmit end receives a 1^{st} data unit or a last data unit in a set. Data units received when the value of the counter remains unchanged belong to a same set, so that the transmit end may associate the data units obtained when the value of the counter remains unchanged with a same set identifier. It may be understood that the counter may be referred to as a set identifier counter, a counter configured to add a set identifier, or the like. A name of the counter is not limited in this embodiment of this application. For the receive end, the receive end may identify, by using a set identifier associated by the transmit end with each data unit, a data unit that belongs to the first set. After obtaining the first data unit, the receive end may conveniently and quickly determine, based on the set identifier associated with the first data unit, that the first data unit belongs to the first set. It may be understood that the set identifier may also be understood as a set serial number, a set flag, or the like.

It may be understood that whether different sets include a same quantity of data units is not limited in this embodiment of this application. For ease of distinguishing between different specific manners (for example, Manner 1 to Manner 3) for the step, in this embodiment of this application, different serial numbers are used for distinguishing, and this does not indicate that there is a sequence between these serial numbers.

203: The communication apparatus detects a packet loss status of the first set to which the first data unit belongs.

The packet loss status of the first set may be understood as a status of data units in the first set that are discarded, a status of data units in the first set that are not successfully sent, a status of data units in the first set that fail to be reassembled, a status of data units in the first set whose processing results do not meet a standard specification, or a status of data units in the first set whose processing processes do not meet a standard specification. For example, the packet loss status of the first set includes at least one of the following: a quantity of data units that are discarded by a PDCP entity at the transmit end, a quantity of data units that are not successfully sent by the PDCP entity at the transmit end, a quantity of data units that are discarded by an RLC entity at the transmit end, a quantity of data units that are not successfully sent by the RLC entity at the transmit end, a quantity of data units that are not successfully delivered by a PDCP entity at the receive end to an upper layer, a quantity of data units that fail to be reassembled by an UM RLC entity at the receive end, and a quantity of data units that fail to be reassembled by an AM RLC entity receive end.

It may be understood that the packet loss status described above is described by using a quantity as an example, and should not be understood as a limitation on this embodiment of this application. For example, the packet loss status may alternatively be measured by using a ratio of the quantity to a total quantity of data units in the first set. Details are not described herein again. Optionally, a total quantity of data units included in a set may be indicated by the application server to the communication apparatus. For example, the application server sends indication information to the communication apparatus, where the indication information includes the total quantity. Optionally, a total quantity of data units included in a set may be deduced by the communication apparatus based on related information. For example, the communication apparatus may determine the total quantity based on the start flag and the end flag described in Manner 1. Optionally, a total quantity of data units included in a set may be sensed by the communication apparatus. For example, the communication apparatus may determine, based on a degree of concentration of data units obtained by the communication apparatus, a total quantity of data units included in a set. A method for learning, by the communication apparatus, a total quantity of data units included in a set is not limited in this embodiment of this application.

The packet loss status of the first set may be a packet loss status occurring at a protocol layer when the communication apparatus (for example, the transmit end or the receive end) processes the first set at the protocol layer, or may be an overall status of packet loss statuses occurring at a plurality of protocol layers when the communication apparatus separately processes the first set at the plurality of protocol layers. If the packet loss status of the first set is the overall status of the packet loss statuses at the plurality of protocol layers, different protocol layers need to report packet loss statuses at the protocol layers to a protocol layer, so that the protocol layer determines whether to discard the first set. For example, for the transmit end, the PDCP entity may send a packet loss status on the PDCP entity to the RLC entity, and the RLC entity determines, with reference to a packet loss status on the RLC entity and the packet loss status on the PDCP entity, whether to discard the first set. For another example, for the receive end, an RLC entity may send a packet loss status on the RLC entity to the PDCP entity, and the PDCP entity determines, with reference to a packet loss status on the PDCP entity and the packet loss status on the RLC entity, whether to discard the first set. For descriptions of the packet loss status of the first set being the overall status of the packet loss statuses at the plurality of protocol layers, refer to the following descriptions of the packet loss status at the protocol layer.

204: The communication apparatus discards the first set when the packet loss status of the first set satisfies a first condition.

The first condition may be defined in a protocol, defined by the network device, defined through negotiation between a sending party and a receiving party, or the like. This is not limited in this embodiment of this application. For example, when the first condition is defined in the protocol, the first condition may be set in the communication apparatus when the communication apparatus is set from a factory. For another example, when the first condition is defined by the network device, the network device may send the first condition to the terminal device. For another example, when the first condition is defined through negotiation between the sending party and the receiving party, the network device may send a first condition expected by the network device to the terminal device, and the terminal device acknowledges the first condition by feeding back an acknowledgment message, or the terminal device may reject, by feeding back a rejection message, the first condition sent by the network device. Optionally, when rejecting the first condition, the terminal device may further send a first condition expected by the terminal device. Certainly, the terminal device may also send the first condition expected by the terminal device to the network device, so that the network device performs acknowledgment or rejection based on the first condition. Details are not described herein again.

A first threshold and a second threshold related to the first condition are described as follows: For example, the first threshold and the second threshold may be defined in the protocol. If the first threshold and the second threshold are defined in the protocol, the first threshold and the second threshold may be set in the communication apparatus when the communication apparatus is set from the factory. For another example, the first threshold and the second threshold may be indicated by the application server to the communication apparatus by using indication information, where the indication information carries at least one of the first threshold and the second threshold. The first threshold and the second threshold may be set differently based on different services. For example, a first threshold corresponding to a high-reliability low-latency service may be different from that corresponding to another service. Alternatively, when the packet loss status of the first set is a packet loss status at a single protocol layer, the first threshold and the second threshold may be set differently based on different protocol layers. Specific values and setting manners of the first threshold and the second threshold are not limited in this embodiment of this application. It may be understood that values of the first threshold in different implementations described below may be the same or different. Similarly, values of the second threshold in different implementations described below may be the same or different. This is not limited in this embodiment of this application.

It may be understood that when the first set is discarded, the transmit end may have sent some data units included in the first set, so that the transmit end does not need to continue to send another data unit included in the first set, and the transmit end may further clear a buffer for the data units that have been sent. When the first set is discarded, the receive end may have processed some data units in the first set, so that the receive end does not need to process another data unit included in the first set, and may further clear a buffer for the data units that have been processed. Optionally, in an AM RLC service mode, the receive end does not need to trigger a status report, and does not need to send, to the transmit end, a status report for a data unit included in the first set.

For specific descriptions of detecting, by the communication apparatus, the packet loss status of the first set to which the first data unit belongs and specific descriptions of the first condition, refer to the following implementations. Details are not described herein.

In this embodiment of this application, that the packet loss status of the first set satisfies the first condition indicates that the first set is unavailable, and the first set may be discarded when the packet loss status of the first set detected by the communication apparatus satisfies the first condition. In this way, a resource waste caused by processing or transmission of the first set by the communication apparatus when the first set is unavailable is reduced. Therefore, according to this embodiment of this application, the resource waste is effectively reduced, and resources are saved. For example, the resource may include at least one of the following: a transmission resource used when the communication apparatus transmits the first set, a processing resource used when the communication apparatus processes the first set, and transmit power used when the communication apparatus sends the first set.

In actual application, some services cannot tolerate packet loss (a degree of tolerance to packet loss may depend on at least one of the following: the variety of services and a video encoding technology used by the application layer). For example, if one data unit is discarded, a set to which the data unit belongs may be unavailable (that is, as long as one data unit is lost, the receive end cannot recover any information). Therefore, when one data unit (for example, the first data unit) is lost, if the transmit end continues to transmit a remaining data unit in the first set to which the first data unit belongs, not only transmission resources are wasted, but also processing resources of the receive end are wasted. According to the method provided in this embodiment of this application, the transmit end may actively discard the first set when detecting that the packet loss status of the first set to which the first data unit belongs satisfies the first condition (for example, at least one data unit in the set is discarded), effectively saving transmission resources and processing resources of the receive end. In a case in which the application server uses a video encoding technology such as network encoding, when a quantity of lost packets in the first set is less than a specific threshold, the first set is not affected, and an application client can still recover all information based on a remaining data packet in the first set. For example, when application layer forward error correction (forward error correction, FEC) encoding is used, the application server sends K1 data packets including original video information and (N-K1) data packets obtained by encoding the original video information, and the application client can recover all information as long as successfully receiving K2 data packets, where K2 is greater than or equal to K1 and less than or equal to N, and K1, K2, and N are all positive integers. However, if a quantity of lost packets in the first set is greater than or equal to a specific threshold, an application client cannot recover complete information even if a subsequent data packet is successfully transmitted. Therefore, transmission of the subsequent data packet may cause an unnecessary waste of air interface resources and transmission energy. According to the method provided in this embodiment of this application, the application server may discard the first set when the quantity of lost packets in the first set is greater than or equal to the specific threshold, saving air interface resources and transmission energy. It may be understood that the application described above is merely an example and should not be construed as a limitation on this embodiment of this application. It may be understood that the application server described herein may be understood as a transmit end and the application client may be understood as a receive end; or the application server may send a data packet to a network device, the network device serves as a transmit end, and the application client serves as a receive end.

The following describes the method shown in FIG. 2 with reference to a specific protocol layer. However, the protocol layer described below should not be understood as a limitation on this embodiment of this application, and any scenario in which the communication apparatus can detect a packet loss status of the first set at a protocol layer or packet loss statuses of the first set at some protocol layers falls within the protection scope of this embodiment of this application.

### Implementation 1

In a possible implementation, in the method shown in FIG. 2, the detecting a packet loss status of the first set to which the first data unit belongs includes: collecting statistics about a quantity of data units in the first set that are discarded, where that the packet loss status of the first set satisfies the first condition includes: The quantity of data units that are discarded is greater than or equal to the first threshold, or a ratio of the quantity of data units that are discarded to a total quantity of data units in the first set is greater than or equal to the second threshold.

In this embodiment of this application, the communication apparatus may detect the packet loss status of the first set by collecting the statistics about the quantity of data units in the first set that are discarded, and therefore, discard the first set when the quantity of data units that are discarded is greater than or equal to the first threshold or the ratio of the quantity of data units that are discarded to the total quantity of data units in the first set is greater than or equal to the second threshold. The first threshold and the second threshold are thresholds used to measure the quantity of data units that are discarded, whose specific values are not limited. Certainly, that the packet loss status of the first set satisfies the first condition may include that both the condition about the first threshold and the condition about the second threshold are satisfied. This description is also applicable to another implementation described in this embodiment of this application.

It may be understood that the communication apparatus may retain the first set when the packet loss status of the first set does not satisfy the first condition. For example, if the communication apparatus obtains the first threshold, and the quantity of data units in the first set that are discarded, obtained by the communication apparatus, is less than the first threshold, the communication apparatus may retain the first set. If the communication apparatus obtains the first threshold, and the ratio of the quantity of data units that are discarded to the total quantity of data units in the first set is less than the second threshold, the communication apparatus may retain the first set. If the communication apparatus obtains the first threshold and the second threshold, the quantity of data units in the first set that are discarded, obtained by the communication apparatus, is less than the first threshold, and the ratio of the quantity of data units that are discarded to the total quantity of data units in the first set is less than the second threshold, the communication apparatus retains the first set.

In this embodiment of this application, discarding the first set when the quantity of data units in the first set that are discarded is equal to the first threshold is merely an example. For example, the first set may be retained when the quantity of data units in the first set that are discarded is equal to the first threshold. Similarly, the first set may be retained when the ratio of the quantity of data units in the first set that are discarded to the total quantity of data units included in the first set is equal to the second threshold.

The statistics about the quantity of data units in the first set that are discarded may be collected in the following manners.

Manner 4: When a timer corresponding to the first data unit expires and the first data unit is not successfully sent, the quantity of data units in the first set that are discarded is increased by 1.

Manner 5: When a timer corresponding to the first data unit expires and the first data unit is not successfully sent, a counter corresponding to the first set is increased by 1.

Manner 6: When the first data unit is not successfully sent within preset duration after obtaining of the first data unit, the quantity of data units in the first set that are discarded is increased by 1. As described herein, the preset duration after obtaining of the first data unit may be understood as a period of time after time at which the communication apparatus obtains the first data unit and that may be used by the communication apparatus as start time. Correspondingly, as described below, that an entity of the communication apparatus performs timing on duration after obtaining of the first data unit may also be understood as follows: The entity of the communication apparatus uses time at which the entity obtains the first data unit as start time, and then performs timing on a period of time after the start time.

In this embodiment of this application, when the entity of the communication apparatus obtains the first data unit, the entity of the communication apparatus may perform timing on the duration after obtaining of the first data unit. If the first data unit is not successfully sent within the preset duration, the entity of the communication apparatus may discard the first data unit, and increase the quantity of data units in the first set that are discarded by 1. In an example, the duration after obtaining of the first data unit may be timed via a timer, for example, the timer corresponding to the first data unit. The timer corresponding to the first data unit may be understood as a discard timer corresponding to the first data unit. Timing duration of the timer corresponding to the first data unit may be defined in a standard, configured by the base station, or the like. The timing duration of the timer corresponding to the first data unit is not limited in this embodiment of this application. For example, when receiving the first data unit, the entity of the communication apparatus may start the timer corresponding to the first data unit. If the timer expires and the first data unit is not successfully sent, the entity of the communication apparatus may discard the first data unit. Certainly, if the timer does not expire, and the communication apparatus has sent the first data unit, it indicates that the first data unit is not discarded. When the timer corresponding to the first data unit expires and the first data unit is not sent, the quantity of data units in the first set that are discarded may be increased by 1, for example, the statistics about the quantity of data units in the first set that are discarded may be collected via the counter. The counter may be configured to collect the statistics about the quantity of data units in the first set that are discarded. In other words, each time a data unit in the first set is discarded, a value of the counter may be increased by 1. An initialization condition of the counter may be that the communication apparatus obtains the 1^{st} data unit in the first set. The counter described herein may also be referred to as a data packet loss counter, a data unit discard counter, or the like. A specific name of the counter is not limited in this embodiment of this application.

For the transmit end, that the first data unit is not successfully sent may include at least one of the following: The first data unit is not delivered to a lower layer, the first data unit is not sent through an air interface, and the first data unit is not delivered to a MAC layer. For the receive end, that the first data unit is not successfully sent includes: The first data unit is not delivered to an upper layer, and the first data unit fails to be reassembled. Optionally, that the first data unit is not delivered to the MAC layer may include that the first data unit is not delivered to the MAC layer for packet assembly.

For example, the PDCP entity at the transmit end is used as an example. That the first data unit is not successfully sent may include at least one of the following: The first data unit is not delivered to an RLC layer, the first data unit is not sent through an air interface, and the first data unit is not delivered to the MAC layer. After the PDCP entity determines to discard the first data unit, the PDCP entity may discard the first data unit. Alternatively, when the first data unit is delivered to the RLC entity, the PDCP entity may indicate the RLC entity to discard the first data unit. Alternatively, when the first data unit has not been delivered to the MAC layer, the RLC entity may be indicated to discard the first data unit.

For another example, the RLC entity at the transmit end is used as an example. That the first data unit is not successfully sent may include at least one of the following: The first data unit is not delivered to a MAC layer; any SDU segment of the first data unit is not yet delivered to the MAC layer; the RLC entity at the transmit end receives a negative acknowledgment (negative acknowledgment, NACK) from the RLC entity at the receive end after the first data unit or an SDU segment of the first data unit is last transmitted; and a MAC entity at the transmit end receives a corresponding hybrid automatic repeat request (hybrid automatic repeat request, HARQ) NACK after at least one MAC PDU corresponding to the first data unit or the SDU segment of the first data unit is last transmitted.

For another example, the PDCP entity at the receive end is used as an example. That the first data unit is not successfully sent may include that the first data unit is not delivered to an upper layer. The RLC entity at the receive end is used as an example. That the first data unit is not successfully sent may include: The first data unit is not delivered to a PDCP layer, and the first data unit fails to be reassembled. That the first data unit fails to be reassembled may be represented as that reassembly of the first data unit is not completed when the timer corresponding to the first data unit expires.

For example, when the first data unit is the 1^{st} data unit in the first set, the communication apparatus may start to collect the statistics about the quantity of data units in the first set that are discarded. Generally, serial numbers of different data units in a set are continuously allocated. However, different data units in a set may not be sequentially processed or sequentially transmitted. As a result, a 1^{st} data unit obtained by the communication apparatus from the first set, may not be a data unit with a minimum serial number in the first set. When obtaining the 1^{st} data unit in the first set, the communication apparatus may start to collect the statistics about the quantity of data units in the first set that are discarded. For example, if the first data unit is the 1^{st} data unit in the first set, it may be understood that the first data unit is the data unit with the minimum serial number in the first set, or it may be understood that the first data unit is the 1^{st} data unit obtained by the communication apparatus from the first set, that is, the first data unit may be the data unit with the minimum serial number, or may not be the data unit with the minimum serial number. For example, when the first data unit is the 1^{st} data unit in the first set, the counter corresponding to the first set is initialized, to start to collect the statistics about the quantity of data units in the first set that are discarded.

It may be understood that the descriptions of the first data unit in this embodiment of this application are also applicable to another data unit in the first set.

The following describes Implementation 1 with reference to specific examples. The following examples should not be understood as limitations on this embodiment of this application.

### Example 1

The transmitting PDCP entity detects the packet loss status, and collects statistics about a quantity or a proportion of lost packets, to actively discard a frame when the first condition is satisfied. The first condition includes: The quantity of data units that are discarded is greater than or equal to the first threshold, or the ratio of the quantity of data units that are discarded to the total quantity of data units in the first set is greater than or equal to the second threshold. For example, the transmitting PDCP entity maintains a loss counter for each PDU set. When a value of the loss counter is greater than or equal to the first threshold, or a ratio of a value of the loss counter to a total quantity of data units included in one PDU set is greater than or equal to the second threshold, the transmitting PDCP entity triggers active frame discarding. The packet described herein may be understood as a data unit, and the frame may be understood as a PDU set to which the data unit belongs. The value of the loss counter may be understood as a quantity of data units that are discarded. Before a method shown in FIG. 4a is described, the following first describes the PDCP entity in this embodiment of this application.

In a mobile communication system, for confidentiality of data transmission, security protection needs to be performed on data transmitted over a radio air interface, including operations such as encryption and integrity protection. In 5G NR, a security protection function may be performed at the PDCP layer. Each radio bearer (radio bearer, RB) except a signaling radio bearer 0 (signaling radio bearer 0, SRB0) may correspond to one PDCP entity. A PDCP entity is associated with a control plane or a data plane, depending on whether an RB associated with the PDCP entity is an SRB or a data radio bearer (data radio bearer, DRB). The following uses a PDCP entity associated with a DRB as an example to describe processing procedures of the transmitting PDCP entity and the receiving PDCP entity.

After receiving a PDCP SDU from an upper layer, the transmitting PDCP entity first starts a discard timer corresponding to the PDCP SDU, and allocates a PDCP SN to the PDCP SDU; optionally, may further perform header compression, encryption, and integrity protection; and then adds a PDCP header to generate a PDCP PDU, and finally delivers the PDCP PDU to a lower layer. When the discard timer for the PDCP SDU expires, the transmitting PDCP entity discards the PDCP SDU and the corresponding PDCP PDU. If the corresponding PDCP PDU has been delivered to the RLC layer, the PDCP entity may indicate the RLC layer to discard the PDCP SDU.

After receiving a PDCP PDU from a lower layer, the receiving PDCP entity first removes a PDCP header, and performs decryption and integrity protection verification. If integrity protection verification fails, the receiving PDCP entity reports a failure to an upper layer, and discards the PDCP PDU; or if integrity protection verification is successful, the receiving PDCP entity performs duplicate detection, discards a duplicate PDCP PDU received due to retransmission or enabled PDCP duplication, and places a non-duplicate PDCP PDU in a receive buffer. If out-of-order delivery is configured for the PDCP entity, the PDCP entity delivers an obtained PDCP SDU to an upper layer after performing header decompression (if necessary) on the PDCP PDU. If in-order delivery is configured for the PDCP entity, and the PDU is in order (that is, a serial number of a current PDU is a serial number of a previous delivered PDU plus 1), the PDCP entity delivers an obtained PDCP SDU to an upper layer after performing header decompression on the PDCP PDU (if necessary); or if the PDU is out of order, the PDCP entity waits until the PDU is in order, and then delivers the PDU to an upper layer. For example, after a PDU with a serial number 100 is delivered to the upper layer, a PDU with a serial number 102 is received. Because 102 and 100 are discontinuous, the PDU with the serial number 102 is not delivered to the upper layer. After a PDU with a serial number 101 is received, the PDU with the serial number 101 and the PDU with the serial number 102 are delivered to the upper layer. The descriptions of the PDCP entity are also applicable to another manner in this embodiment of this application.

FIG. 4a is a schematic flowchart of a data processing method according to an embodiment of this application. As shown in FIG. 4a, the method includes the following steps.

401: The transmit end obtains a packet loss threshold, where the packet loss threshold may be at least one of the first threshold and the second threshold.

For example, for the UE, the UE may receive radio resource control (radio resource control, RRC) signaling from the base station, where the RRC signaling may be used to configure a PDCP entity or a DRB corresponding to a PDCP entity, and the RRC signaling may include the packet loss threshold. For the base station, the base station may obtain a QoS profile (QoS profile) from an AMF, where the QoS profile may include the packet loss threshold. Usually, when the DRB corresponding to the PDCP entity is established, the base station may associate the QoS profile.

402: After receiving a PDCP SDU from an upper layer, the transmitting PDCP entity starts a discard timer corresponding to the PDCP SDU, and determines a PDU set to which the PDCP SDU belongs.

The transmitting PDCP entity described herein is a PDCP entity in a user plane protocol stack of the transmit end.

For descriptions of determining the PDU set to which the PDCP SDU belongs, refer to Manner 1 to Manner 3. Details are not described herein again. Optionally, after determining the PDU set to which the PDCP SDU belongs, the transmitting PDCP entity may associate the PDCP SDU with an identifier of the PDU set, for example, set a PDU set sequence number (PDU set SN, PSN) for each PDCP SDU. PDU set sequence numbers of PDCP SDUs included in one PDU set may be the same.

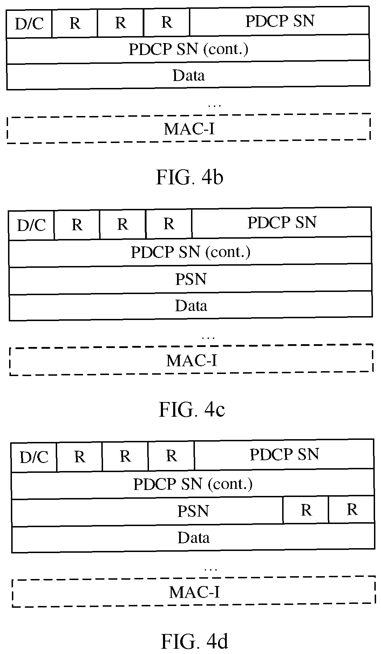

FIG. 4b to FIG. 4d are diagrams in which the transmitting PDCP entity adds a PDU set sequence number to a PDCP header according to an embodiment of this application. In an example, as shown in FIG. 4b, the transmitting PDCP entity may use a reserved (reserved, R) bit in the PDCP header to indicate the PDU set sequence number. In another example, as shown in FIG. 4c, the transmitting PDCP entity may add a byte (for example, a PSN shown in FIG. 4c) to the PDCP header, to indicate the PDU set sequence number, where a field length of the PDU set sequence number is N bytes, and N is an integer. In still another example, as shown in FIG. 4d, the transmitting PDCP entity may add a byte (for example, a PSN shown in FIG. 4d) to the PDCP header, to indicate the PDU set number, where a sum of a field length of the PDU set number and a quantity of reserved bits is N bytes, and N is an integer. Optionally, a length of the PDU set sequence number may be defined in a standard. For example, the PDU set sequence number may include the PDU set sequence number. For another example, a plurality of PDCP data PDU formats having different PSN lengths may be defined in a standard protocol. Optionally, the base station may indicate a PSN length by using RRC signaling, MAC signaling, or layer 1 signaling. It may be understood that FIG. 4c and FIG. 4d show an example in which N=1, but should not be construed as a limitation on this embodiment of this application. In FIG. 4d, two reserved bits located in a same row as the PSN are merely an example.

For FIG. 4b to FIG. 4d, data/control (data/control, D/C) may indicate that a corresponding PDCP PDU is a PDCP data PDU or a PDCP control PDU, and the D/C field may occupy one bit. R indicates a reserved bit. PDCP SN indicates a sequence number of the PDCP PDU, and has a length of 12 bits or 18 bits, and the length is configured by the upper layer (for example, RRC). Data (data) may include a PDCP SDU, and has a variable length. MAC-I may indicate message authentication code, and this field is an optional (optional) field, and may occupy 32 bits. For example, this field may exist when integrity protection is configured for the DRB. Cont. is the abbreviation of continued, indicating that the field is continuous with a previous field. The PDCP header may include D/C, R, and PDCP SN.

403: When the received PDCP SDU is a 1^{st} PDCP SDU in the PDU set, the transmitting PDCP entity initializes a loss counter corresponding to the PDU set.

For example, the loss counter may be represented by PACKET_LOSS_COUNT, and initializing the loss counter corresponding to the PDU set may be understood as PACKET_LOSS_COUNT=0.

In this embodiment of this application, the transmitting PDCP entity may maintain a discard timer for each PDCP SDU, and the transmitting PDCP entity may maintain a loss counter for each PDU set. If the discard timer corresponding to the PDCP SDU expires and the PDCP SDU is not completely sent, the loss counter corresponding to the PDU set to which the PDCP SDU belongs is increased by 1. That the PDCP SDU is not completely sent may include at least one of the following: The PDCP SDU is not delivered to the RLC entity, a corresponding RLC SDU or SDU segment is not delivered to the MAC layer, a corresponding MAC PDU is not sent over an air interface, an AM RLC entity transmit end receives an RLC NACK after the corresponding RLC SDU or SDU segment is last sent, and the MAC entity receives a HARQ NACK after the corresponding MAC PDU is last sent. In a CU-DU split architecture, when the discard timer corresponding to the PDCP SDU expires, a CU may send an indication to a DU, to request the DU to report whether the PDCP SDU is completely sent. If the PDCP SDU is not completely sent, a PDCP entity of the CU may increase the loss counter corresponding to the PDU set to which the PDCP SDU belongs by 1.

If the discard timer corresponding to the PDCP SDU expires and the PDCP SDU has been completely sent, the loss counter corresponding to the PDU set to which the PDCP SDU belongs is not increased by 1. Similarly, if the PDCP SDU has been completely sent before the discard timer corresponding to the PDCP SDU expires, the loss counter corresponding to the PDU set to which the PDCP SDU belongs is not increased by 1. Usually, duration of a discard timer corresponding to a data unit may be configured by the base station by using RRC signaling.

404: When a value of the loss counter corresponding to the PDU set is greater than or equal to the first threshold, or when a ratio of a value of the loss counter corresponding to the PDU set to a total quantity of data packets included in one PDU set is greater than or equal to the second threshold, the transmitting PDCP entity triggers active frame discarding.

In this embodiment of this application, the transmitting PDCP entity maintains a loss counter for each PDU set, to detect packet loss and collect statistics about a quantity of lost packets, and triggers active frame discarding when the first condition is satisfied. This effectively reduces an air interface resource waste and a transmission energy waste caused by transmission of a useless data packet over the air interface, saves resources, and reduces energy consumption of the transmit end.

### Example 2

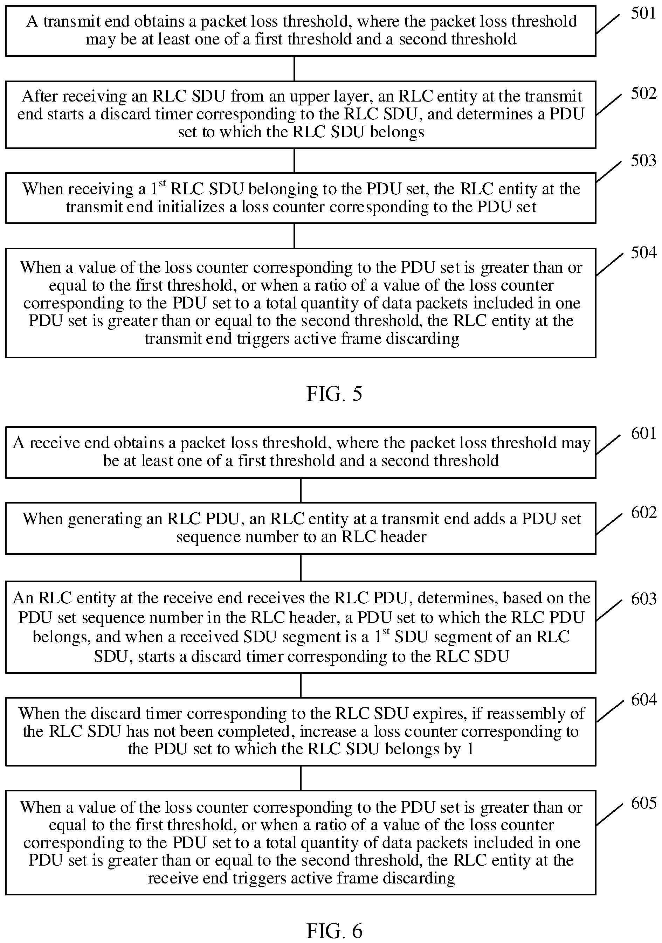

Before a method shown in FIG. 5 is described, the following first describes the RLC entity in this embodiment of this application.

The RLC layer is mainly responsible for splitting an RLC SDU from the PDCP layer into RLC PDUs that match a transmission resource size. Based on a service type, a service mode of the RLC entity may include:
a transparent mode (transparent mode, TM): A data packet is transparently transmitted without processing and addition of a header, where a TM RLC entity is unidirectional, and is classified into a transmitting TM RLC entity and a receiving TM RLC entity;
an unacknowledged mode (unacknowledged mode, UM): supports segment reassembly and duplicate detection, where an UM RLC entity is unidirectional, and is classified into a transmitting UM RLC entity and a receiving UM RLC entity; and
an acknowledged mode (acknowledged mode, AM): supports segment reassembly, duplicate detection, and retransmission of an error data packet, where an AM RLC entity is bidirectional, and is classified into an AM RLC entity transmit end and an AM RLC entity receive end.

After receiving an RLC SDU from the PDCP layer, the RLC entity at the transmit end adds an RLC header to obtain an RLC PDU. After receiving a notification about a transmission opportunity sent by the MAC layer, the RLC entity checks whether a data volume of the obtained RLC PDU matches a size of the transmission opportunity; and if the data volume matches the size of the transmission opportunity, sends the data unit added with the RLC header to the MAC layer; or if the data volume does not match the size of the transmission opportunity, segments the RLC SDU, modifies the RLC header, adds a field such as an SN to the RLC header, and sends the RLC SDU to the MAC layer (SDU segments obtained by segmenting a same RLC SDU carry a same SN number). The RLC entity at the transmit end described in this embodiment of this application may include a transmitting UM RLC entity or an AM RLC entity transmit end. For ease of description, the RLC entity at the transmit end described below indicates that service modes are not distinguished, and functions implemented or steps performed by the RLC entity at the transmit end are applicable to the transmitting UM RLC entity and the AM RLC entity transmit end.

The descriptions of the RLC entity are also applicable to another manner in this embodiment of this application.

FIG. 5 is a schematic flowchart of a data processing method according to an embodiment of this application. As shown in FIG. 5, the method includes the following steps.

501: The transmit end obtains a packet loss threshold, where the packet loss threshold may be at least one of the first threshold and the second threshold.

For descriptions of step 501, refer to step 401. Details are not described herein again.

502: After receiving an RLC SDU from an upper layer, the RLC entity at the transmit end starts a discard timer corresponding to the RLC SDU, and determines a PDU set to which the RLC SDU belongs.

The RLC entity at the transmit end described herein is an RLC entity in a user plane protocol stack of the transmit end.

For descriptions of determining the PDU set to which the RLC SDU belongs, refer to Manner 1 to Manner 3. Details are not described herein again. Optionally, after determining the PDU set to which the RLC SDU belongs, the RLC entity at the transmit end may associate the RLC SDU with an identifier of the PDU set, for example, set a PDU set sequence number for each RLC SDU. PDU set sequence numbers of RLC SDUs included in one PDU set may be the same. In an example, the RLC entity at the transmit end may use a reserved bit in an RLC header to indicate the PDU set sequence number. In another example, the RLC entity at the transmit end may add a byte to an RLC header, to indicate the PDU set sequence number. For example, a field length of the PDU set sequence number is N bytes, where N is an integer. For another example, a sum of a field length of the PDU set number and a quantity of reserved bits is N bytes, where N is an integer. For descriptions of adding the PDU set sequence number, refer to FIG. 4b to FIG. 4d. Details are not described herein again.

Duration of the discard timer may be configured by the network device. For example, for an uplink service, duration of a discard timer in the terminal device may be configured by the base station by using any one of the following pieces of signaling: RRC signaling, a MAC control element (control element, CE), and layer 1 signaling.

It may be understood that the duration of the discard timer maintained by the transmitting PDCP entity may be the same as or different from that of the discard timer maintained by the RLC entity at the transmit end. This is not limited in this embodiment of this application.

503: When receiving a 1^{st} RLC SDU belonging to the PDU set, the RLC entity at the transmit end initializes a loss counter corresponding to the PDU set.

In this embodiment of this application, the RLC entity at the transmit end may maintain a discard timer for each RLC SDU, and the RLC entity at the transmit end may maintain a loss counter for each PDU set. When the discard timer corresponding to the RLC SDU expires, and the RLC SDU or an SDU segment of the RLC SDU has not been sent, the loss counter corresponding to the PDU set to which the RLC SDU belongs is increased by 1. For example, the loss counter may be represented by PACKET_LOSS_COUNT, and initializing the loss counter corresponding to the PDU set may be understood as PACKET_LOSS_COUNT=0. That the RLC SDU or the SDU segment has not been sent may include at least one of the following: The RLC SDU or the SDU segment has not been delivered to the MAC layer, a corresponding MAC PDU is not sent over an air interface, the AM RLC entity transmit end receives an RLC NACK after the corresponding RLC SDU or SDU segment is last sent, and the MAC entity receives a HARQ NACK after the corresponding MAC PDU is last sent.

504: When a value of the loss counter corresponding to the PDU set is greater than or equal to the first threshold, or when a ratio of a value of the loss counter corresponding to the PDU set to a total quantity of data packets included in one PDU set is greater than or equal to the second threshold, the RLC entity at the transmit end triggers active frame discarding.

In a CU-DU scenario, information such as the first threshold, the second threshold, and the total quantity of data packets included in the PDU set may be sent by a CU to a DU. For example, the CU sends the information to the DU by using a downlink user data (DL user data) message on an F1 interface, so that the DU implements the method shown in FIG. 5.

In this embodiment of this application, the RLC entity at the transmit end maintains a discard timer for each RLC SDU and a loss counter for each PDU set, and triggers active frame discarding when the first condition is satisfied. This effectively reduces an air interface resource waste and a transmission energy waste caused by transmission of a useless data packet, thereby effectively saving resources and reducing energy consumption of the transmit end.

### Example 3

FIG. 6 is a schematic flowchart of a data processing method according to an embodiment of this application. As shown in FIG. 6, the method includes the following steps.

601: The receive end obtains a packet loss threshold, where the packet loss threshold may be at least one of the first threshold and the second threshold.

For descriptions of step 601, refer to step 401. Details are not described herein again.

602: When generating an RLC PDU, the RLC entity at the transmit end adds a PDU set sequence number to an RLC header.

For a method for determining, by the RLC entity at the transmit end, a PDU set to which an RLC SDU belongs, refer to Manner 1 to Manner 3. For a method for adding an identifier of the PDU set to the RLC header, refer to the descriptions of step 502 in FIG. 5.

603: The RLC entity at the receive end receives the RLC PDU, determines, based on the PDU set sequence number in the RLC header, a PDU set to which the RLC PDU belongs, and when a received SDU segment is a 1^{st} SDU segment of the RLC SDU, starts a discard timer corresponding to the RLC SDU.

The RLC entity at the receive end described herein is an RLC entity in a user plane protocol stack of the receive end.

It may be understood that if the RLC PDU is placed in a receive buffer, and an SDU segment in the RLC PDU cannot be reassembled into a complete SDU with another SDU segment in the receive buffer, the RLC entity at the receive end may determine, based on the PDU set sequence number in the RLC header, the PDU set to which the RLC PDU belongs; or if an SDU segment in the RLC PDU can be reassembled into a complete SDU with another SDU segment in the receive buffer, obtains the complete SDU through reassembly, and then delivers the complete SDU to an upper layer, without determining the PDU set to which the RLC PDU belongs. It may be understood that whether the received SDU segment is the 1^{st} SDU segment of the RLC SDU may be determined by using the identifier in the RLC header.

604: When the discard timer corresponding to the RLC SDU expires, if reassembly of the RLC SDU has not been completed, increase a loss counter corresponding to the PDU set to which the RLC SDU belongs by 1.

For example, the loss counter may be represented by PACKET_LOSS_COUNT, and initializing the loss counter corresponding to the PDU set may be understood as PACKET_LOSS_COUNT=0. When the received RLC PDU is a 1^{st} RLC PDU in a PDU set, a discard counter corresponding to the PDU set may be initialized. That reassembly of the RLC SDU is not completed includes: All segments of the RLC SDU are not successfully received.

Duration of the discard timer may be configured by the network device. For example, for an uplink service, duration of a discard timer in the terminal device may be configured by the base station by using any one of the following pieces of signaling: RRC signaling, a MAC control element (control element, CE), and layer 1 signaling.

605: When a value of the loss counter corresponding to the PDU set is greater than or equal to the first threshold, or when a ratio of a value of the loss counter corresponding to the PDU set to a total quantity of data packets included in one PDU set is greater than or equal to the second threshold, the RLC entity at the receive end triggers active frame discarding.

In a CU-DU scenario, information such as the packet loss threshold and the total quantity of data packets included in the PDU set may be sent by a CU to a DU. For example, the CU sends the information to the DU by using a downlink user data message on an F1 interface.

It may be understood that a service mode of the RLC entity at the receive end may include an UM mode or an AM mode, and the service mode of the RLC entity at the receive end is not limited.

In this embodiment of this application, the RLC entity at the receive end maintains a discard timer for each RLC SDU, maintains a loss counter for each PDU set, updates a loss counter corresponding to a PDU set to which an RLC SDU belongs when a discard timer corresponding to the RLC SDU expires, and triggers active frame discarding when a quantity and/or a proportion of lost data packets reaches a threshold. For an AM RLC entity, this effectively avoids an air interface resource waste and a transmission energy waste caused by retransmission of a useless data packet by the transmit end, saves resources, and reduces energy consumption of the transmit end. For an UM RLC entity, this effectively avoids a case in which another protocol layer of the receive end consumes a processing resource for processing a useless data packet, saves resources, and reduces energy consumption of the receive end.

### Implementation 2

In another possible implementation, in the method shown in FIG. 2, the detecting a packet loss status of the first set to which the first data unit belongs includes: when a timer corresponding to the first set expires, collecting statistics about a quantity of data units in the first set that are not successfully sent, where that the packet loss status of the first set satisfies the first condition includes: The quantity of data units that are not successfully sent is greater than or equal to the first threshold, or a ratio of the quantity of data units that are not successfully sent to a total quantity of data units in the first set is greater than or equal to the second threshold.

In this embodiment of this application, the communication apparatus may detect the packet loss status of the first set by collecting the statistics about the quantity of data units that are not successfully sent.

For the transmit end, the data unit that is not successfully sent may include at least one of the following: a data unit that is not delivered to a lower layer, a data unit that is not sent through an air interface, and a data unit that is not delivered to a MAC layer. For the receive end, the data unit that is not successfully sent includes at least one of the following: a data unit that is not delivered to an upper layer, and a data unit that fails to be reassembled.

For example, when the timer corresponding to the first set expires, the transmitting PDCP entity may collect the statistics about the quantity of data units that are not successfully sent. For a transmitting PDCP layer, the data unit that is not successfully sent may include at least one of the following: a data unit that is not delivered to an RLC layer, the data unit that is not delivered to the MAC layer, and the data unit that is not sent through the air interface. For another example, when the timer corresponding to the first set expires, the RLC entity at the transmit end may collect the statistics about the quantity of data units that are not successfully sent. For the RLC entity at the transmit end, the data unit that is not successfully sent includes at least one of the following: the data unit that is not delivered to the MAC layer, a data unit for which the RLC entity at the transmit end receives a negative acknowledgment from an RLC entity at the receive end after last transmission, and a data unit for which a MAC entity at the transmit end receives a corresponding HARQ NACK after last transmission. For another example, when the timer corresponding to the first set expires, the receiving PDCP entity may collect the statistics about the quantity of data units that are not successfully sent. For the receiving PDCP entity, the data unit that is not successfully sent may include at least one of the following: the data unit that is not delivered to the upper layer. For another example, when the timer corresponding to the first set expires, the RLC entity at the receive end may collect the statistics about the quantity of data units that are not successfully sent. For the RLC entity at the receive end, the data unit that is not successfully sent may include at least one of the following: a data unit that is not delivered to the PDCP layer, and the data unit that fails to be reassembled. It may be understood that for descriptions of the data unit that is not successfully sent, refer to Implementation 1. Details are not described herein again.

It may be understood that the quantity of data units that are not successfully sent includes a quantity of remaining unprocessed data units in the first set (or a quantity of remaining data units in the first set that are not delivered to the lower layer, or a quantity of remaining data units in the first set that are not delivered to the upper layer) when the timer corresponding to the first set expires. Optionally, the quantity of data units that are not successfully sent may further include at least one of the following: a status of discarding, by the PDCP entity at the transmit end, a data unit in the first set because a discard timer for the data unit expires; a status of discarding, by the PDCP entity at the receive end, a data unit based on a variable (for example, a reordering timer) maintained by the PDCP entity; and a status of discarding, by the RLC entity at the receive end, a data unit due to a reassembly failure. It may be understood that the status of discarding the data unit described herein may be understood as a quantity of data units in the first set that are discarded when the timer corresponding to the first set does not expire.

For example, when the first data unit is the 1^{st} data unit in the first set, the timer corresponding to the first set is started. For descriptions of the 1^{st} data unit, refer to Implementation 1. Details are not described herein again.

It may be understood that the descriptions of the first data unit in this embodiment of this application are also applicable to another data unit in the first set.

The following describes Implementation 2 with reference to specific examples. The following examples should not be understood as limitations on this embodiment of this application.

### Example 4

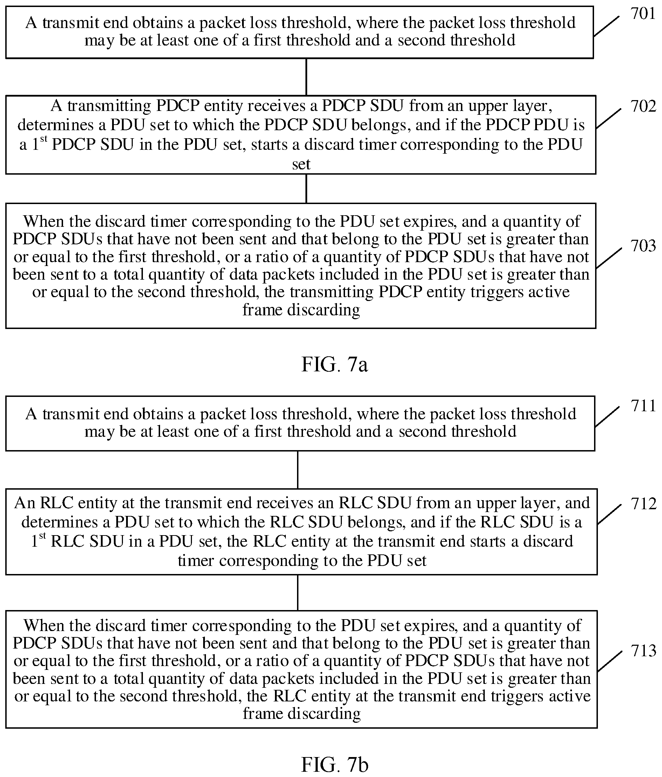

FIG. 7a is a schematic flowchart of a data processing method according to an embodiment of this application. As shown in FIG. 7a, the method includes the following steps.

701: The transmit end obtains a packet loss threshold, where the packet loss threshold may be at least one of the first threshold and the second threshold.

For descriptions of step 701, refer to the descriptions of step 401 in FIG. 4a. Details are not described herein again

702: The transmitting PDCP entity receives a PDCP SDU from an upper layer, determines a PDU set to which the PDCP SDU belongs, and if the PDCP PDU is a 1^{st} PDCP SDU in the PDU set, starts a discard timer corresponding to the PDU set.

For example, the discard timer may be represented by PDUSet_discardTimer. Duration of the discard timer may be configured by the network device. For example, for an uplink service, duration of a discard timer in the terminal device may be configured by the base station by using any one of the following pieces of signaling: RRC signaling, a MAC CE, and layer 1 signaling. The transmitting PDCP entity described herein is a PDCP entity in a user plane protocol stack of the transmit end.

703: When the discard timer corresponding to the PDU set expires, and a quantity of PDCP SDUs that have not been sent and that belong to the PDU set is greater than or equal to the first threshold, or a ratio of a quantity of PDCP SDUs that have not been sent to a total quantity of data packets included in the PDU set is greater than or equal to the second threshold, the transmitting PDCP entity triggers active frame discarding.

In this embodiment of this application, the transmitting PDCP entity maintains a discard timer for each PDU set. When the discard timer expires, if a quantity of data units that are not sent and that belong to a PDU set satisfies the first condition, the transmitting PDCP entity triggers active frame discarding. This effectively reduces an air interface resource waste and a transmission energy waste caused by transmission of a useless data packet over the air interface, saves resources, and reduces energy consumption of the transmit end.

### Example 5

FIG. 7b is a schematic flowchart of a data processing method according to an embodiment of this application. As shown in FIG. 7b, the method includes the following steps.

711: The transmit end obtains a packet loss threshold, where the packet loss threshold may be at least one of the first threshold and the second threshold.

For descriptions of step 711, refer to the descriptions of step 401 in FIG. 4a or step 501 in FIG. 5. Details are not described herein again.

712: The RLC entity at the transmit end receives an RLC SDU from an upper layer, and determines a PDU set to which the RLC SDU belongs. If the RLC SDU is a 1^{st} RLC SDU in a PDU set, the RLC entity at the transmit end starts a discard timer corresponding to the PDU set.

For descriptions of step 712, refer to the descriptions of step 702 in FIG. 7a. Details are not described herein again.

713: When the discard timer corresponding to the PDU set expires, and a quantity of PDCP SDUs that have not been sent and that belong to the PDU set is greater than or equal to the first threshold, or a ratio of a quantity of PDCP SDUs that have not been sent to a total quantity of data packets included in the PDU set is greater than or equal to the second threshold, the RLC entity at the transmit end triggers active frame discarding.

In this embodiment of this application, the RLC entity at the transmit end maintains a discard timer for each PDU set. When the discard timer expires, if a quantity of data units that are not sent and that belong to a PDU set satisfies the first condition, the RLC entity at the transmit end triggers active frame discarding, to avoid an air interface resource waste and a transmission energy waste caused by transmission of a useless data packet.

### Example 6

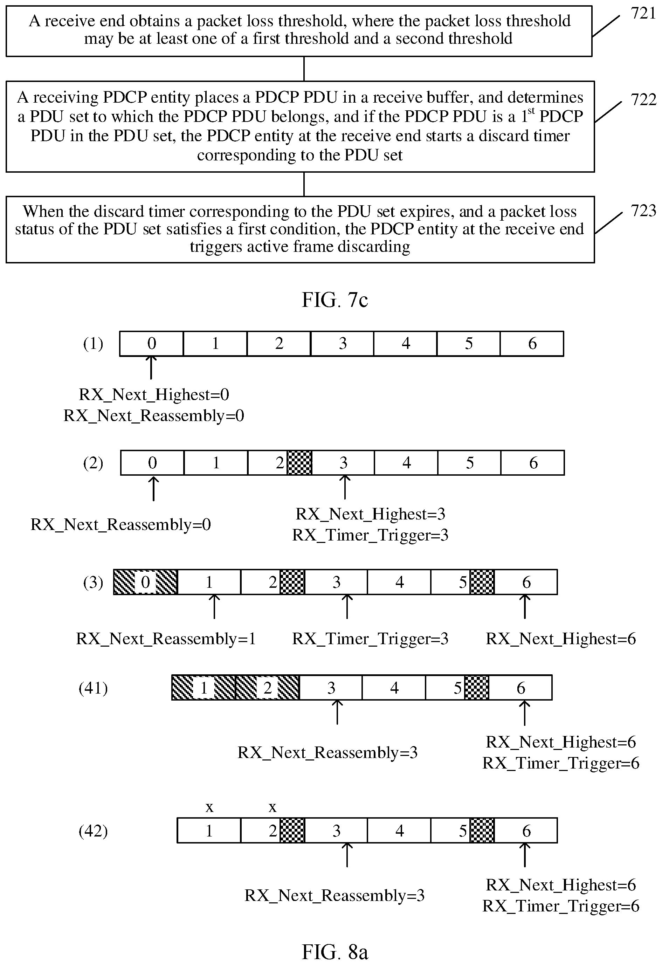

FIG. 7c is a schematic flowchart of a data processing method according to an embodiment of this application. As shown in FIG. 7c, the method includes the following steps.

721: The receive end obtains a packet loss threshold, where the packet loss threshold may be at least one of the first threshold and the second threshold.

For descriptions of step 721, refer to the descriptions of step 401 in FIG. 4a or 601 in FIG. 6. Details are not described herein again.

722: The receiving PDCP entity places a PDCP PDU in a receive buffer, and determines a PDU set to which the PDCP PDU belongs. If the PDCP PDU is a 1^{st} PDCP PDU in the PDU set, the PDCP entity at the receive end starts a discard timer corresponding to the PDU set.

If all PDCP PDUs belonging to a PDU set have been delivered to an upper layer, the PDCP entity at the receive end stops a corresponding timer. It may be understood that for a manner of determining the PDU set to which the PDCP PDU belongs, refer to FIG. 4b to FIG. 4d, and the like. Details are not described herein again. It may be understood that for descriptions of the discard timer, refer to the descriptions of step 702 in FIG. 7a, or refer to the descriptions of step 712 in FIG. 7b. Details are not described herein again.

Optionally, if receiving a 1^{st} PDCP PDU that belongs to the PDU set, the receiving PDCP entity may further assign a value of 1 to a data packet arrival counter (packetArrivalCount) corresponding to the PDU set (which may also be understood as initializing the data packet arrival counter to 1). If the received PDCP PDU is not a 1^{st} PDCP PDU in the PDU set, the receiving PDCP entity may increase a value of a data packet arrival counter corresponding to the PDU set by 1. Optionally, after the PDU set to which the PDCP PDU belongs is determined, if it is determined that the discard timer corresponding to the PDU set is not running, a value of 1 may be assigned to a data packet arrival counter corresponding to the PDU set; or if it is determined that the discard timer corresponding to the PDU set is running, a value of a data packet arrival counter corresponding to the PDU set may be increased by 1. Optionally, the data packet arrival counter may be initialized to 0. After receiving a PDCP PDU that belongs to a PDU set, the receiving PDCP entity increases a value of a data packet arrival counter corresponding to the PDU set by 1.

When all PDCP PDUs belonging to the PDU set are received, that is, the value of the data packet arrival counter packetArrivalCount corresponding to the PDU set is equal to a total quantity of data packets in the PDU set, the receiving PDCP entity stops the discard timer corresponding to the PDU set.

723: When the discard timer corresponding to the PDU set expires, and a packet loss status of the PDU set satisfies the first condition, the PDCP entity at the receive end triggers active frame discarding.

For example, that the packet loss status of the PDU set satisfies the first condition includes: A difference between a total quantity of PDU PDUs included in the PDU set and the value of the data packet arrival counter is greater than or equal to the first threshold, or a ratio of the difference to the total quantity of PDCP PDUs included in the PDU set is greater than or equal to the second threshold.

When the discard timer corresponding to the PDU set expires, and the packet loss status of the PDU set does not satisfy the first condition, the receiving PDCP entity may deliver, to the upper layer, all PDCP SDUs that are in the receive buffer and that belong to the PDU set.

In this embodiment of this application, the receiving PDCP entity maintains a discard timer for each PDU set. When the discard timer expires, if a quantity of data packets that are not successfully delivered in the PDU set is greater than or equal to the first threshold, or a ratio of a quantity of data packets that are not successfully delivered to a total quantity of data packets in the PDU set is greater than or equal to the second threshold, the receiving PDCP entity triggers active frame discarding, to avoid an air interface resource waste and a transmission energy waste caused by retransmission of a useless data packet by the transmit end.

### Implementation 3

In a possible implementation, in the method shown in FIG. 2, the detecting a packet loss status of the first set to which the first data unit belongs includes: collecting statistics about a quantity of data units in the first set that fail to be reassembled, where that the packet loss status of the first set satisfies the first condition includes: The quantity of data units that fail to be reassembled is greater than or equal to the first threshold, or a ratio of the quantity of data units that fail to be reassembled to a total quantity of data units in the first set is greater than or equal to the second threshold.

It can be learned from the RLC entity described in Implementation 1 that the RLC entity at the transmit end may segment an RLC SDU. For the receive end, the RLC entity at the receive end needs to reassemble the segmented SDU and deliver a reassembled RLC SDU to an upper layer; or discard an RLC SDU that fails to be reassembled; or request the transmit end to retransmit an RLC SDU that fails to be reassembled.

In an example, the collecting statistics about a quantity of data units in the first set that fail to be reassembled includes: when the first data unit fails to be reassembled, increasing the quantity of data units in the first set that fail to be reassembled by 1. In another example, the collecting statistics about a quantity of data units in the first set that fail to be reassembled includes: when the first data unit fails to be reassembled, increasing a counter corresponding to the first set by 1. In still another example, the collecting statistics about a quantity of data units in the first set that fail to be reassembled includes: when a timer corresponding to the first data unit expires and the first data unit fails to be reassembled, increasing the quantity of data units in the first set that fail to be reassembled by 1.

In this embodiment of this application, that the first data unit fails to be reassembled includes: One or more data unit segments included in the first data unit are discarded, or reassembly of one or more data unit segments included in the first data unit is not completed. In other words, the RLC entity at the receive end may discard an RLC SDU according to a reassembly rule in a reassembly process. Discarding is, for example, discarding some SDUs because a receive window moves. That reassembly is not completed is, for example, that not all segments of the SDU are received when the discard timer expires.

When the first data unit is the 1^{st} data unit in the first set, the statistics about the quantity of data units in the first set that fail to be reassembled starts to be collected. For specific descriptions of the 1^{st} data unit, refer to the foregoing descriptions. Details are not described herein again.

For example, the following describes a specific reassembly manner used by a receiving UM RLC entity. For example, the receiving UM RLC entity may maintain the following variables:
(1) RX_Next_Highest: an upper bound of a reassembly window, whose variable value is equal to a maximum SN of a received data unit whose reassembly is not completed plus 1, where a lower bound of the reassembly window is RX_Next_Highest-UM_Window_Size, where UM_Window_Size indicates a size of the reassembly window, and may be a constant, and if an SN satisfies the following condition: (RX_Next_Highest-UM_Window_Size)<=SN<RX Next_Highest, the SN falls within the reassembly window, or if an SN does not satisfy the following condition: (RX Next__Highest-UM_Window_Size)<=SN<RX_Next_Highest, the SN falls outside the reassembly window;
(2) RX_Next_Reassembly: equal to an SN of an earliest to-be-reassembled RLC SDU; and
(3) RX_Timer_Trigger: equal to the value of RX_Next_Highest when a reassembly timer (t-Reassembly) is started.

When receiving a data unit, the receiving UM RLC entity checks whether an RLC header of the data unit includes an SN. If the RLC header does not include the SN, it indicates that the data unit includes a complete RLC SDU, and the receiving UM RLC entity removes the RLC header of the data unit and delivers the data unit to an upper layer; or if the RLC header includes the SN, the receiving UM RLC entity further checks whether the SN of the data unit satisfies (RX_Next_Highest-UM_Window_Size)<=SN<RX_Next_Reassembly, and if the SN of the data unit satisfies (RX_Next_Highest-UM_Window_Size)<=SN<RX_Next_Reassembly, discards the data unit, or if the SN of the data unit does not satisfy (RXNext_Highest-UM_Window_Size)<=SN<RX_Next_Reassembly, places the data unit in a receive buffer.

When an SDU segment included in the data unit can be reassembled into a complete RLC SDU with an existing SDU segment in the receive buffer, the receiving UM RLC entity delivers the complete RLC SDU obtained through reassembly to the upper layer. In this case, if the SN of the data unit is equal to RX_Next_Reassembly, the receiving UM RLC entity updates the variable RX_Next_Reassembly to an SN of a 1^{st} data unit whose SN is greater than current RX_Next_Reassembly and whose reassembly has not been completed. When an SDU segment included in the data unit cannot be reassembled into a complete RLC SDU with an existing SDU segment in the receive buffer, if the SN of the data unit is greater than or equal to RX_Next_Highest, the receiving UM RLC entity updates the variable RX_Next_Highest to be equal to the SN plus 1, and discards all RLC PDUs whose SNs fall outside the reassembly window. If RX_Next_Reassembly falls outside the reassembly window, the receiving UM RLC entity sets the variable RX_Next_Reassembly to an SN of a 1^{st} data unit whose SN is greater than RX_Next__Highest-UM_Window_Size and whose reassembly has not been completed.

The receiving UM RLC entity starts t-Reassembly and sets a value of the variable RX_Timer_Trigger to be equal to a current value of RX_Next_Highest when the reassembly timer t-Reassembly is not running and one of the following conditions is satisfied:
(1) RX_Next_Highest>RX_Next_Reassembly+1; and
(2) RX_Next_Highest=RX_Next_Reassembly+1 (that is, only reassembly of a data unit with an SN=RX_Next_Reassembly has not been completed), and there is an SDU segment that has not been received before a last byte of a currently received data unit.

When the reassembly timer t-Reassembly expires, the receiving UM RLC entity sets the variable RX_Next_Reassembly to an SN of a 1^{st} data unit whose SN is greater than RX_Timer_Trigger and whose reassembly has not been completed, and discards segments of all SDUs in the receive buffer whose SNs are less than RX_Next_Reassembly.

For example, FIG. 8a is a diagram of a process in which the receiving UM RLC entity maintains the variables according to an embodiment of this application. (1) in FIG. 8a indicates an initial state in which the receiving UM RLC entity has not received any data unit. (2) in FIG. 8a indicates that the receiving UM RLC entity receives an SDU segment whose SN is 2, and in this case, updates RX_Next_Highest to 3. Because RX_Next_Highest>RX_Next_Reassembly+1, the receiving UM RLC entity starts the reassembly timer, and RX_Timer_Trigger=3. (3) in FIG. 8a indicates that reassembly of a data unit with an SN=0 is completed, the data unit with the SN=0 is delivered to an upper layer, and the variable RX_Next_Reassembly is updated to 1. In addition, the receiving UM RLC entity receives an SDU segment of a data unit whose SN is 5, and in this case, updates RX_Next_Highest to 6. (41) in FIG. 8a indicates that when the reassembly timer does not expire, if reassembly of an RLC SDU with an SN=1 and an RLC SDU with an SN=2 is completed, the receiving UM RLC entity delivers the RLC SDUs to the upper layer, and updates RX_Next_Reassembly to 3. Because RX_Timer_Trigger (=3)<=RX_Next_Reassembly (=3), the reassembly timer is stopped and reset. Because RX_Next_Highest>RX_Next__Reassembly+1, the reassembly timer is started, and RX_Timer_Trigger=6. (42) in FIG. 8a indicates that when the reassembly timer expires, if reassembly of a data unit with an SN=1 and a data unit with an SN=2 has not been completed, the receiving UM RLC discards buffered SDU segments with the SN=1 and the SN=2, and updates the variables maintained by the receiving UM RLC entity and the reassembly timer. It may be understood that for ease of differentiation, (41) and (42) are respectively used to represent parallel solutions in FIG. 8a.

It should be noted that similar descriptions such as a "1^{st} SN", an "earliest SN", a "maximum SN", and an operation between the variables in this embodiment of this application all represent results of modulo operations. For example, if a value of a variable ranges from 0 to 511, and SNs of data units sequentially received by an entity are 0, 1, 2, and 3, the 1^{st} SN is 0, the earliest SN is 0, and the maximum SN is 3. For another example, if 510, 511, 0, 1, and 2 are sequentially received, the 1^{st} SN is 510, the earliest SN is 510, and the maximum SN is 2. It may be understood that the variable described herein may be understood as a variable maintained by the entity.

Whether to discard the first set may be determined by collecting the statistics about the quantity of data units in the first set that fail to be reassembled, to avoid a case in which a useless data packet is delivered to an upper layer and another protocol layer consumes a processing resource for processing the data packet, effectively saving processing resources. Further, for AM RLC, an air interface resource waste and a transmission energy waste caused by retransmission of a data packet by the transmit end can be effectively avoided, and air interface resources and transmission energy are effectively saved.

The following describes Implementation 3 with reference to a specific example. The following example should not be understood as a limitation on this embodiment of this application.

### Example 7

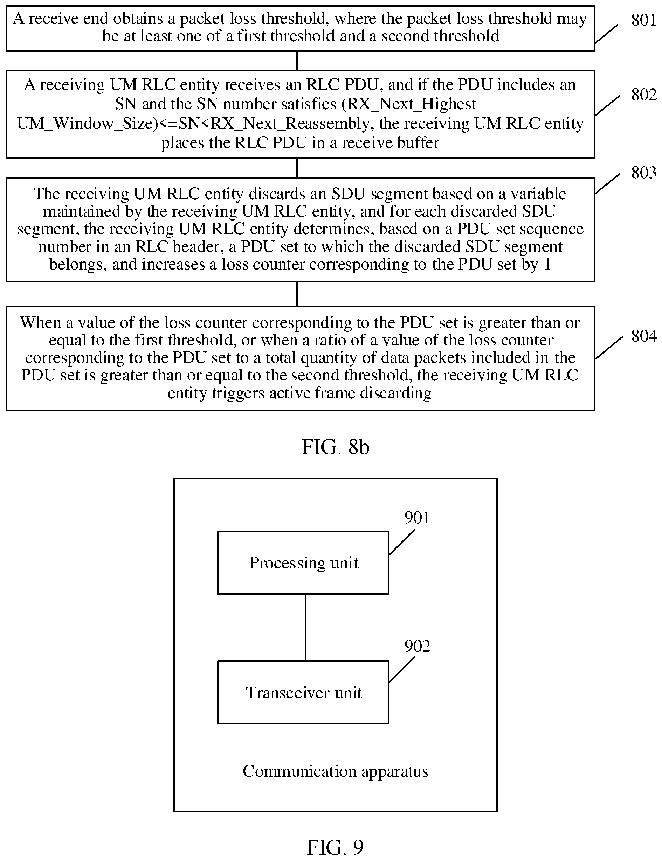

FIG. 8b is a schematic flowchart of a data processing method according to an embodiment of this application. As shown in FIG. 8b, the method includes the following steps.

801: The receive end obtains a packet loss threshold, where the packet loss threshold may be at least one of the first threshold and the second threshold.

It may be understood that an UM RLC entity at the transmit end may segment an RLC SDU based on a quantity of RLC PDUs and a size of a transmission opportunity, and add an SN and a PDU set sequence number to an RLC header. For a method for determining, by the UM RLC entity at the transmit end, the PDU set number of the RLC SDU, refer to Manner 1 to Manner 3. For a manner for adding the PDU set sequence number, refer to FIG. 4b to FIG. 4d. Details are not described herein again.

For descriptions of the packet loss threshold in step 801, refer to the descriptions of step 401 in FIG. 4a. Details are not described herein again.

802: The receiving UM RLC entity receives an RLC PDU, and if the PDU includes an SN and the SN number satisfies (RX_Next_Highest-UM_Window_Size)<=SN<RX_Next_Reassembly, the receiving UM RLC entity places the RLC PDU in a receive buffer.

If the PDU does not include an SN, the receiving UM RLC entity removes an RLC header of the RLC PDU, and delivers an obtained RLC SDU to an upper layer.

803: The receiving UM RLC entity discards an SDU segment based on the variable maintained by the receiving UM RLC entity, and for each discarded SDU segment, the receiving UM RLC entity determines, based on a PDU set sequence number in an RLC header, a PDU set to which the discarded SDU segment belongs, and increases a loss counter corresponding to the PDU set by 1.

For example, if a plurality of segments in discarded SDU segments belong to a same SDU, that is, SN numbers of these segments are the same, the segments are counted as one.

That the receiving UM RLC entity discards the SDU segment based on the variables maintained by the receiving UM RLC entity may include the following cases.

First, if an RLC SDU segment included in the RLC PDU cannot be reassembled into a complete SDU with an existing RLC SDU segment in the receive buffer, and an SN of the RLC SDU segment is greater than or equal to RX_Next_Highest, the receiving UM RLC entity updates the value of RX_Next_Highest to be equal to the SN plus 1, and discards all SDU segments whose SNs fall outside the reassembly window.

Second, when the reassembly timer t-Reassembly expires, the receiving UM RLC entity sets RX_Next_Reassembly to an SN number of a 1^{st} RLC SDU whose SN is greater than RX_Timer_Trigger and whose reassembly is not completed, and discards all SDU segments whose SNs are less than RX_Next_Reassembly.

804: When a value of the loss counter corresponding to the PDU set is greater than or equal to the first threshold, or a ratio of a value of the loss counter corresponding to the PDU set to a total quantity of data packets in the PDU set is greater than or equal to the second threshold, the receiving UM RLC entity triggers active frame discarding.

In a CU-DU scenario, information such as the packet loss threshold and the total quantity of data packets included in the PDU set may be sent by a CU to a DU. For example, the CU sends the information to the DU by using a downlink user data message on an F1 interface.

In this embodiment of this application, the receiving UM RLC entity maintains a loss counter for each PDU set, collects statistics about a quantity or a proportion of data packets that are lost in each PDU set when the reassembly window is updated or an RLC SDU segment needs to be discarded due to expiration of the reassembly timer, and triggers active frame discarding when the quantity or the proportion of the data packets that are lost reaches a specific threshold. In this way, a case in which a useless data packet is delivered to an upper layer and another protocol layer consumes a processing resource for processing the data packet is avoided, effectively saving processing resources.

It may be understood that in the foregoing implementations, for a part that is not described in detail in one implementation, refer to another implementation. Unless otherwise specified, the sequence numbers of the foregoing steps do not indicate a sequence. For example, for related descriptions in FIG. 4a, FIG. 5, FIG. 6, FIG. 7a to FIG. 7c, and FIG. 8b, refer to FIG. 2. For example, for related descriptions in FIG. 5 and FIG. 6, refer to FIG. 4a. For related descriptions in FIG. 7a to FIG. 7c, refer to FIG. 4a, FIG. 5, FIG. 6, or the like. Details are not listed herein again.

A communication apparatus provided in embodiments of this application is described below.

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that module division in this application is an example, and is merely a logical function division. In actual implementation, another division manner may be used. The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing unit 901 and a transceiver unit 902.

The processing unit 901 is configured to obtain a first data unit.

The processing unit 901 is further configured to detect a packet loss status of a first set to which the first data unit belongs.

The processing unit 901 is further configured to discard the first set when the packet loss status of the first set satisfies a first condition.

For example, the transceiver unit 902 is configured to send a data unit included in the first set, or is configured to receive a data unit included in the first set.

In a possible implementation, the processing unit 901 is further configured to determine that the first data unit belongs to the first set.

In a possible implementation, the processing unit 901 is specifically configured to collect statistics about a quantity of data units in the first set that are discarded, where that the packet loss status of the first set satisfies the first condition includes: The quantity of data units that are discarded is greater than or equal to a first threshold, or a ratio of the quantity of data units that are discarded to a total quantity of data units in the first set is greater than or equal to a second threshold.

In a possible implementation, the processing unit 901 is specifically configured to: when a timer corresponding to the first data unit expires and the first data unit is not successfully sent, increase the quantity of data units in the first set that are discarded by 1.

In a possible implementation, the processing unit 901 is further configured to: when the first data unit is a 1^{st} data unit in the first set, start to collect the statistics about the quantity of data units in the first set that are discarded.

In a possible implementation, the processing unit 901 is specifically configured to: when a timer corresponding to the first set expires, collect statistics about a quantity of data units in the first set that are not successfully sent, where that the packet loss status of the first set satisfies the first condition includes: The quantity of data units that are not successfully sent is greater than or equal to a first threshold, or a ratio of the quantity of data units that are not successfully sent to a total quantity of data units in the first set is greater than or equal to a second threshold.

In a possible implementation, the processing unit 901 is further configured to: when the first data unit is a 1^{st} data unit in the first set, start the timer corresponding to the first set.

In a possible implementation, the processing unit 901 is specifically configured to collect statistics about a quantity of data units in the first set that fail to be reassembled, where that the packet loss status of the first set satisfies the first condition includes: The quantity of data units that fail to be reassembled is greater than or equal to a first threshold, or a ratio of the quantity of data units that fail to be reassembled to a total quantity of data units in the first set is greater than or equal to a second threshold.

In a possible implementation, the processing unit 901 is specifically configured to: when the first data unit fails to be reassembled, increase the quantity of data units in the first set that fail to be reassembled by 1.

In a possible implementation, the processing unit 901 is further configured to: when the first data unit is a 1^{st} data unit in the first set, start to collect the statistics about the quantity of data units in the first set that fail to be reassembled.

It may be understood that the specific descriptions of the transceiver unit and the processing unit described in this embodiment of this application are merely examples. For specific functions, steps, or the like performed by the transceiver unit and the processing unit, refer to the foregoing method embodiments (as shown in FIG. 2, FIG. 4a, FIG. 5, FIG. 6, FIG. 7a to FIG. 7c, and FIG. 8b). Details are not described herein again.

In this embodiment of this application, for descriptions of the first set, the first data unit, the timer corresponding to the first data unit, the timer corresponding to the first set, being not successfully sent, failing to be reassembled, and the like, refer to the descriptions in the foregoing method embodiments. Details are not described herein again.

The foregoing describes the communication apparatus in this embodiment of this application. The following describes possible product forms of the communication apparatus. It should be understood that a product in any form that has a function of the communication apparatus in FIG. 9 falls within the protection scope of embodiments of this application. It should be further understood that the following descriptions are merely examples, and the product form of the communication apparatus in this embodiment of this application is not limited thereto.

In a possible implementation, in the communication apparatus shown in FIG. 9, the processing unit 901 may be one or more processors. The transceiver unit 902 may be a transceiver. Alternatively, the transceiver unit 902 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information, and then processed information is input into the processor.

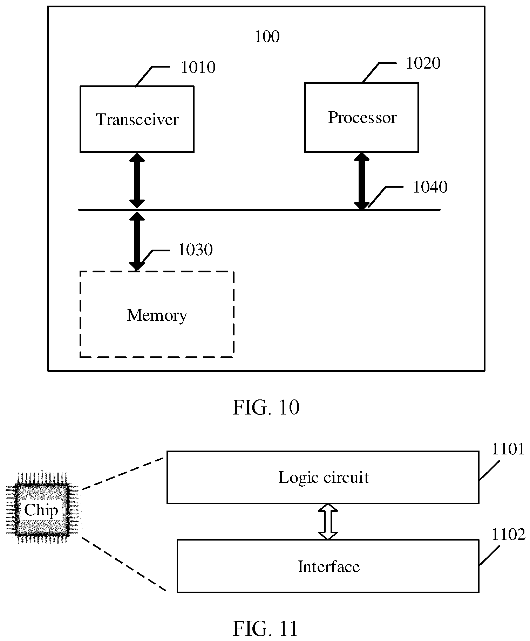

As shown in FIG. 10, a communication apparatus 100 includes one or more processors 1020 and a transceiver 1010.

The processor 1020 is configured to obtain a first data unit.

The processor 1020 is further configured to detect a packet loss status of a first set to which the first data unit belongs.

The processor 1020 is further configured to discard the first set when the packet loss status of the first set satisfies a first condition.

For example, the transceiver 1010 is configured to send a data unit included in the first set, or is configured to receive a data unit included in the first set.

In a possible implementation, the processor 1020 is further configured to determine that the first data unit belongs to the first set.

In a possible implementation, the processor 1020 is specifically configured to collect statistics about a quantity of data units in the first set that are discarded, where that the packet loss status of the first set satisfies the first condition includes: The quantity of data units that are discarded is greater than or equal to a first threshold, or a ratio of the quantity of data units that are discarded to a total quantity of data units in the first set is greater than or equal to a second threshold.

In a possible implementation, the processor 1020 is specifically configured to: when a timer corresponding to the first data unit expires and the first data unit is not successfully sent, increase the quantity of data units in the first set that are discarded by 1.

In a possible implementation, the processor 1020 is further configured to: when the first data unit is a 1^{st} data unit in the first set, start to collect the statistics about the quantity of data units in the first set that are discarded.

In a possible implementation, the processor 1020 is specifically configured to: when a timer corresponding to the first set expires, collect statistics about a quantity of data units in the first set that are not successfully sent, where that the packet loss status of the first set satisfies the first condition includes: The quantity of data units that are not successfully sent is greater than or equal to a first threshold, or a ratio of the quantity of data units that are not successfully sent to a total quantity of data units in the first set is greater than or equal to a second threshold.

In a possible implementation, the processor 1020 is further configured to: when the first data unit is a 1^{st} data unit in the first set, start the timer corresponding to the first set.

In a possible implementation, the processor 1020 is specifically configured to collect statistics about a quantity of data units in the first set that fail to be reassembled, where that the packet loss status of the first set satisfies the first condition includes: The quantity of data units that fail to be reassembled is greater than or equal to a first threshold, or a ratio of the quantity of data units that fail to be reassembled to a total quantity of data units in the first set is greater than or equal to a second threshold.

In a possible implementation, the processor 1020 is specifically configured to: when the first data unit fails to be reassembled, increase the quantity of data units in the first set that fail to be reassembled by 1.

In a possible implementation, the processor 1020 is further configured to: when the first data unit is a 1^{st} data unit in the first set, start to collect the statistics about the quantity of data units in the first set that fail to be reassembled.

It may be understood that the specific descriptions of the transceiver and the processor described in this embodiment of this application are merely examples. For specific functions, steps, or the like performed by the transceiver and the processor, refer to the foregoing method embodiments (as shown in FIG. 2, FIG. 4a, FIG. 5, FIG. 6, FIG. 7a to FIG. 7c, and FIG. 8b). Details are not described herein again.

In this embodiment of this application, for descriptions of the first set, the first data unit, the timer corresponding to the first data unit, the timer corresponding to the first set, being not successfully sent, failing to be reassembled, and the like, refer to the descriptions in the foregoing method embodiments. Details are not described herein again.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions, data, and/or the like. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

A specific connection medium between the transceiver 1010, the processor 1020, and the memory 1030 is not limited in this embodiment of this application. In this embodiment of this application, the memory 1030, the processor 1020, and the transceiver 1010 are connected through a bus 1040 in FIG. 10. The bus is represented by a thick line in FIG. 10. Connections between other components are merely examples for description, and shall not be construed as a limitation. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like, and can implement or perform the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is but is not limited to any storage medium that can be used to carry or store program code in a form of an instruction or a data structure and that can be read and/or written by a computer (for example, the communication apparatus described in this application). The memory in this embodiment of this application may alternatively be a circuit or any other apparatus that can implement a storage function, and is configured to store the program instructions and/or the data.

For example, the processor 1020 is mainly configured to process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave via the antenna. When data is sent to the communication apparatus, the radio frequency circuit receives a radio frequency signal via the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus described in this embodiment of this application may further have more components than those in FIG. 10, and the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit, where the sending unit may be an output interface, the receiving unit may be an input interface, and the sending unit and the receiving unit are integrated into one unit, for example, an input/output interface. As shown in FIG. 11, the communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC) chip, or the like. The interface 1102 may be a communication interface, an input/output interface, a pin, or the like. For example, FIG. 11 shows an example in which the communication apparatus is a chip. The chip includes the logic circuit 1101 and the interface 1102.

In this embodiment of this application, the logic circuit and the interface may be coupled to each other. A specific manner of connection between the logic circuit and the interface is not limited in this embodiment of this application.

The interface 1102 is configured to input a first data unit.

The logic circuit 1101 is configured to detect a packet loss status of a first set to which the first data unit belongs.

The logic circuit 1101 is further configured to discard the first set when the packet loss status of the first set satisfies a first condition.

For example, the interface 1102 is configured to output a data unit included in the first set, or is configured to input a data unit included in the first set.

In a possible implementation, the logic circuit 1101 is further configured to determine that the first data unit belongs to the first set.

In a possible implementation, the logic circuit 1101 is specifically configured to collect statistics about a quantity of data units in the first set that are discarded, where that the packet loss status of the first set satisfies the first condition includes: The quantity of data units that are discarded is greater than or equal to a first threshold, or a ratio of the quantity of data units that are discarded to a total quantity of data units in the first set is greater than or equal to a second threshold.

In a possible implementation, the logic circuit 1101 is specifically configured to: when a timer corresponding to the first data unit expires and the first data unit is not successfully sent, increase the quantity of data units in the first set that are discarded by 1.

In a possible implementation, the logic circuit 1101 is further configured to: when the first data unit is a 1^{st} data unit in the first set, start to collect the statistics about the quantity of data units in the first set that are discarded.

In a possible implementation, the logic circuit 1101 is specifically configured to: when a timer corresponding to the first set expires, collect statistics about a quantity of data units in the first set that are not successfully sent, where that the packet loss status of the first set satisfies the first condition includes: The quantity of data units that are not successfully sent is greater than or equal to a first threshold, or a ratio of the quantity of data units that are not successfully sent to a total quantity of data units in the first set is greater than or equal to a second threshold.

In a possible implementation, the logic circuit 1101 is further configured to: when the first data unit is a 1^{st} data unit in the first set, start the timer corresponding to the first set.

In a possible implementation, the logic circuit 1101 is specifically configured to collect statistics about a quantity of data units in the first set that fail to be reassembled, where that the packet loss status of the first set satisfies the first condition includes: The quantity of data units that fail to be reassembled is greater than or equal to a first threshold, or a ratio of the quantity of data units that fail to be reassembled to a total quantity of data units in the first set is greater than or equal to a second threshold.

In a possible implementation, the logic circuit 1101 is specifically configured to: when the first data unit fails to be reassembled, increase the quantity of data units in the first set that fail to be reassembled by 1.

In a possible implementation, the logic circuit 1101 is further configured to: when the first data unit is a 1^{st} data unit in the first set, start to collect the statistics about the quantity of data units in the first set that fail to be reassembled.

It may be understood that specific descriptions of the logic circuit and the interface described in this embodiment of this application are merely examples. For specific functions, steps, or the like performed by the transceiver unit and the processing unit, refer to the foregoing method embodiments (as shown in FIG. 2, FIG. 4a, FIG. 5, FIG. 6, FIG. 7a to FIG. 7c, and FIG. 8b). Details are not described herein again.

In this embodiment of this application, for descriptions of the first set, the first data unit, the timer corresponding to the first data unit, the timer corresponding to the first set, being not successfully sent, failing to be reassembled, and the like, refer to the descriptions in the foregoing method embodiments. Details are not described herein again.

It may be understood that the communication apparatus described in this embodiment of this application may implement the methods provided in embodiments of this application in a form of hardware, or may implement the methods provided in embodiments of this application in a form of software. This is not limited in this embodiment of this application.

For specific implementations of embodiments shown in FIG. 11, refer to the foregoing embodiments. Details are not described herein again.

An embodiment of this application further provides a wireless communication system. The wireless communication system includes a transmit end and a receive end. The transmit end and the receive end may be configured to perform the method in any one of the foregoing embodiments (as shown in FIG. 2, FIG. 4a, FIG. 5, FIG. 6, FIG. 7a to FIG. 7c, and FIG. 8b). Alternatively, for the transmit end and the receive end, refer to the communication apparatuses shown in FIG. 9 to FIG. 11.

In addition, this application further provides a computer program. The computer program is used to implement operations and/or processing performed by the communication apparatus in the methods provided in this application.

This application further provides a computer-readable storage medium. The computer-readable storage medium stores computer code. When the computer code is run on a computer, the computer is enabled to perform operations and/or processing performed by a communication apparatus end in the methods provided in this application.

This application further provides a computer program product. The computer program product includes computer code or a computer program. When the computer code or the computer program is run on a computer, operations and/or processing performed by the communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement, to achieve technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
obtaining a first data unit;
detecting a packet loss status of a first set to which the first data unit belongs; and
discarding the first set when the packet loss status of the first set satisfies a first condition.

2. The method according to claim 1, wherein before the detecting a packet loss status of a first set to which the first data unit belongs, the method further comprises:
determining that the first data unit belongs to the first set.

3. The method according to claim 1 or 2, wherein the detecting a packet loss status of a first set to which the first data unit belongs comprises:
collecting statistics about a quantity of data units in the first set that are discarded, wherein
that the packet loss status of the first set satisfies the first condition comprises: the quantity of data units that are discarded is greater than or equal to a first threshold, or a ratio of the quantity of data units that are discarded to a total quantity of data units in the first set is greater than or equal to a second threshold.

4. The method according to claim 3, wherein the collecting statistics about a quantity of data units in the first set that are discarded comprises:
when a timer corresponding to the first data unit expires and the first data unit is not successfully sent, increasing the quantity of data units in the first set that are discarded by 1.

5. The method according to claim 3 or 4, wherein the method further comprises:
when the first data unit is a 1^{st} data unit in the first set, starting to collect the statistics about the quantity of data units in the first set that are discarded.

6. The method according to claim 4 or 5, wherein that the first data unit is not successfully sent comprises at least one of the following: the first data unit is not delivered to a lower layer, the first data unit is not sent through an air interface, and the first data unit is not delivered to a media access control MAC layer; or that the first data unit is not successfully sent comprises at least one of the following: the first data unit is not delivered to an upper layer, and the first data unit fails to be reassembled.

7. The method according to claim 1 or 2, wherein the detecting a packet loss status of a first set to which the first data unit belongs comprises:
when a timer corresponding to the first set expires, collecting statistics about a quantity of data units in the first set that are not successfully sent, wherein
that the packet loss status of the first set satisfies the first condition comprises: the quantity of data units that are not successfully sent is greater than or equal to a first threshold, or a ratio of the quantity of data units that are not successfully sent to a total quantity of data units in the first set is greater than or equal to a second threshold.

8. The method according to claim 7, wherein the method further comprises:
when the first data unit is a 1^{st} data unit in the first set, starting the timer corresponding to the first set.

9. The method according to claim 7 or 8, wherein the data unit that is not successfully sent comprises at least one of the following: a data unit that is not delivered to a lower layer, a data unit that is not sent through an air interface, and a data unit that is not delivered to a MAC layer; or the data unit that is not successfully sent comprises at least one of the following: a data unit that is not delivered to an upper layer, and a data unit that fails to be reassembled.

10. The method according to claim 1 or 2, wherein the detecting a packet loss status of a first set to which the first data unit belongs comprises:
collecting statistics about a quantity of data units in the first set that fail to be reassembled, wherein
that the packet loss status of the first set satisfies the first condition comprises: the quantity of data units that fail to be reassembled is greater than or equal to a first threshold, or a ratio of the quantity of data units that fail to be reassembled to a total quantity of data units in the first set is greater than or equal to a second threshold.

11. The method according to claim 10, wherein the collecting statistics about a quantity of data units in the first set that fail to be reassembled comprises:
when the first data unit fails to be reassembled, increasing the quantity of data units in the first set that fail to be reassembled by 1.

12. The method according to claim 11, wherein that the first data unit fails to be reassembled comprises: one or more data unit segments comprised in the first data unit are discarded, or reassembly of one or more data unit segments comprised in the first data unit is not completed.

13. The method according to any one of claims 10 to 12, wherein the method further comprises:
when the first data unit is a 1^{st} data unit in the first set, starting to collect the statistics about the quantity of data units in the first set that fail to be reassembled.

14. A communication apparatus, wherein the apparatus comprises:
a processing unit, configured to obtain a first data unit, wherein
the processing unit is further configured to detect a packet loss status of a first set to which the first data unit belongs; and
the processing unit is further configured to discard the first set when the packet loss status of the first set satisfies a first condition.

15. The apparatus according to claim 14, wherein the processing unit is further configured to determine that the first data unit belongs to the first set.

16. The apparatus according to claim 14 or 15, wherein the processing unit is specifically configured to collect statistics about a quantity of data units in the first set that are discarded, wherein
that the packet loss status of the first set satisfies the first condition comprises: the quantity of data units that are discarded is greater than or equal to a first threshold, or a ratio of the quantity of data units that are discarded to a total quantity of data units in the first set is greater than or equal to a second threshold.

17. The apparatus according to claim 16, wherein the processing unit is specifically configured to: when a timer corresponding to the first data unit expires and the first data unit is not successfully sent, increase the quantity of data units in the first set that are discarded by 1.

18. The apparatus according to claim 16 or 17, wherein the processing unit is further configured to: when the first data unit is a 1^{st} data unit in the first set, start to collect the statistics about the quantity of data units in the first set that are discarded.

19. The apparatus according to claim 17 or 18, wherein that the first data unit is not successfully sent comprises at least one of the following: the first data unit is not delivered to a lower layer, the first data unit is not sent through an air interface, and the first data unit is not delivered to a media access control MAC layer; or that the first data unit is not successfully sent comprises at least one of the following: the first data unit is not delivered to an upper layer, and the first data unit fails to be reassembled.

20. The apparatus according to claim 14 or 15, wherein the processing unit is specifically configured to: when a timer corresponding to the first set expires, collect statistics about a quantity of data units in the first set that are not successfully sent, wherein
that the packet loss status of the first set satisfies the first condition comprises: the quantity of data units that are not successfully sent is greater than or equal to a first threshold, or a ratio of the quantity of data units that are not successfully sent to a total quantity of data units in the first set is greater than or equal to a second threshold.

21. The apparatus according to claim 20, wherein the processing unit is further configured to: when the first data unit is a 1^{st} data unit in the first set, start the timer corresponding to the first set.

22. The apparatus according to claim 20 or 21, wherein the data unit that is not successfully sent comprises at least one of the following: a data unit that is not delivered to a lower layer, a data unit that is not sent through an air interface, and a data unit that is not delivered to a MAC layer; or the data unit that is not successfully sent comprises at least one of the following: a data unit that is not delivered to an upper layer, and a data unit that fails to be reassembled.

23. The apparatus according to claim 14 or 15, wherein the processing unit is specifically configured to collect statistics about a quantity of data units in the first set that fail to be reassembled, wherein
that the packet loss status of the first set satisfies the first condition comprises: the quantity of data units that fail to be reassembled is greater than or equal to a first threshold, or a ratio of the quantity of data units that fail to be reassembled to a total quantity of data units in the first set is greater than or equal to a second threshold.

24. The apparatus according to claim 23, wherein the processing unit is specifically configured to: when the first data unit fails to be reassembled, increase the quantity of data units in the first set that fail to be reassembled by 1.

25. The apparatus according to claim 24, wherein that the first data unit fails to be reassembled comprises: one or more data unit segments comprised in the first data unit are discarded, or reassembly of one or more data unit segments comprised in the first data unit is not completed.

26. The apparatus according to any one of claims 23 to 25, wherein the processing unit is further configured to: when the first data unit is a 1^{st} data unit in the first set, start to collect the statistics about the quantity of data units in the first set that fail to be reassembled.

27. A communication apparatus, comprising a processor and a memory, wherein
the memory is configured to store instructions; and
the processor is configured to execute the instructions, so that the method according to any one of claims 1 to 13 is performed.

28. A chip, comprising a logic circuit and an interface, wherein the logic circuit is coupled to the interface; and
the interface is configured to input and/or output code instructions, and the logic circuit is configured to execute the code instructions, so that the method according to any one of claims 1 to 13 is performed.

29. A computer-readable storage medium, wherein the computer-readable storage medium is configured to store a computer program, and when the computer program is executed, the method according to any one of claims 1 to 13 is performed.
